# EUROPEAN PATENT APPLICATION

(11) **EP 4 697 736 A1**
(43) Date of publication of application: **18.02.2026**
(21) Application number: 25715152.2
(22) Date of filing: 07.03.2025
(51) Int. Cl.: H04N 23/69, H04N 23/61, H04N 23/90, H04N 25/46, H04N 25/11

(54) **METHOD FOR PROVIDING IMAGE, AND ELECTRONIC DEVICE SUPPORTING SAME**

(30) Priority: 17.06.2024 KR 20240078487; 04.07.2024 KR 20240088031
(71) Applicant: SAMSUNG ELECTRONICS CO., LTD., Yeongtong-gu Suwon-si, Gyeonggi-do 16677 (KR)
(72) Inventor: CHOI, Muncheol, Suwon-si Gyeonggi-do 16677 (KR); SHIM, Jaekyu, Suwon-si Gyeonggi-do 16677 (KR)
(74) Representative: Gulde & Partner
(86) International application number: PCT/KR2025/003035
(87) International publication number: WO 2025/263741

(57) **Abstract**

An electronic device (301) according to an embodiment includes an inertial measurement unit sensor (310), a camera (320) including an image sensor, a processor (360), and a controller (330). The controller (330) is configured to acquire a size and a direction of motion of the electronic device (301) occured by hand shaking, based on sensing data acquired through the inertial measurement unit sensor (310) while a camera application is executed. The controller (330) is configured to determine a first region for acquiring an image within the entire region of the image sensor, based on the size and the direction of the motion of the electronic device (301). The controller (330) is configured to acquire pixel values of pixels included in the first region. The controller (330) is configured to provide the acquired pixel values to the processor (360).

## Description

### [Technical Field]

The disclosure relates to a method of providing an image and an electronic device supporting the same.

### [Background Art]

Technology for hand shaking correction (also referred to as "camera shaking correction") may include optical image stabilization (OIS), digital image stabilization (DIS), and electrical image stabilization (EIS).

OIS may be technology for correcting an image by moving a lens and/or an image sensor, based on motion of an electronic device (for example, camera) acquired from an inertial measurement unit (IMU) sensor (for example, a gyro sensor or an acceleration sensor). DIS may be technology for extracting a vector related to motion of an electronic device, based on a difference image between image frames and correcting an image, based on the extracted vector. EIS may be technology for correcting an image, based on motion of an electronic device acquired from an inertial measurement unit (IMU) sensor (for example, a gyro sensor or an acceleration sensor).

The information may be provided as the related art to help understanding of the disclosure. Any opinion or decision on whether the above-mentioned content can be applied as the prior art related to the disclosure has been not provided.

### [Detailed Description of the Invention]

### [Technical Solution]

When hand shaking is corrected using EIS, a camera included in an electronic device may acquire an image (for example, pixel values of pixels included in an image sensor of the camera) including not only a first region having the size corresponding to (for example, the same as) the size of an image to be output through a display but also an additional second region (also referred to as a "margin region") surrounding the first region, used to perform hand shaking correction. For example, the camera may crop a part including the first region and the second region within the image acquired from entire pixels of the image sensor and transfer the cropped part to a processor (for example, an application processor). The processor may determine a region for correcting hand shaking within the cropped part, based on motion of the electronic device (for example, the size and the direction of the motion of the electronic device) acquired based on sensing data acquired through an inertial measurement unit (IMU) sensor (for example, a gyro sensor or an acceleration sensor). The processor may crop the determined region within the cropped part and display the cropped region (the determined region) through the display. In this case, since the camera transfers an image having the size larger than the size (for example, the size of the first region) of the image to be displayed through the display to the processor, the camera transfers a larger amount of data to the processor than the case where an image having the size that is the same as the size of the image to be displayed through the display is transferred to the processor. Further, since the camera crops the part including the first region and the second region within the image acquired from entire pixels of the image sensor and then the processor performs the crop operation for acquiring an image in which hand shaking is corrected, the crop operation is overlappingly performed and thus more resources may be used and more power may be consumed.

Various embodiments of the disclosure relate to a method of providing an image and an electronic device supporting the same, capable of determining a region for acquiring an image in which hand shaking is corrected within the entire region of the image sensor included in the camera, based on motion of the electronic device and acquiring an image from the determined region (for example, pixels included in the determined region).

The technical problem to be solved in the disclosure may not be limited to the above mentioned technical problem, and other technical problems which are not mentioned may be clearly understood, through the following descriptions, by those skilled in the art of the disclosure.

An electronic device according to an embodiment may include an IMU sensor, a camera including an image sensor, a processor, and a controller. The controller may be configured to acquire a size and a direction of motion of the electronic device occurred by hand shaking, based on sensing data acquired through the IMU sensor while a camera application is executed. The controller may be configured to determine a first region for acquiring an image within the entire region of the image sensor, based on the size and the direction of the motion of the electronic device. The controller may be configured to acquire pixel values of pixels included in the first region. The controller may be configured to provide the acquired pixel values to the processor.

In an embodiment, a method of providing an image by an electronic device may include acquiring, by the controller of the electronic device, a size and a direction of motion of the electronic device occurred by hand shaking, based on sensing data acquired through the IMU sensor of the electronic device while a camera application is executed. The method may include determining, by the controller of the electronic device, a first region for acquiring an image within the entire region of the image sensor included in the camera of the electronic device, based on the size and the direction of the motion of the electronic device. The method may include acquiring, by the controller of the electronic device, pixel values of pixels included in the first region. The method may include providing, by the controller of the electronic device, the acquired pixel values to the processor of the electronic device.

An electronic device according to an embodiment may include an IMU sensor, a camera including an image sensor, a controller, and a processor. The processor may be configured to acquire a size and a direction of motion of the electronic device occurred by hand shaking, based on sensing data acquired through the IMU sensor while a camera application is executed. The processor may be configured to determine a first region for acquiring an image within the entire region of the image sensor, based on the size and the direction of the motion of the electronic device. The processor may be configured to provide information on the first region to the controller to allow the controller to acquire pixel values of pixels included in the first region. The processor may be configured to receive the pixel values acquired by the controller from the controller.

In an embodiment, a computer-readable recording medium is provided, the computer-readable recording medium comprising instructions that, when executed by a controller of an electronic device that comprises an inertial measurement unit sensor, a camera including an image sensor, the controller, and a processor, cause the electronic device to execute the method.

### [Brief Description of Drawings]

FIG. 1 is a block diagram of an electronic device within a network environment according to an embodiment.
FIG. 2 is a block diagram illustrating a camera module according to an embodiment.
FIG. 3 is a block diagram of the electronic device according to an embodiment.
FIG. 4 is a block diagram of the electronic device according to an embodiment.
FIG. 5 is a flowchart illustrating a method of providing an image according to an embodiment.
FIG. 6 is a flowchart illustrating a method of determining a first region according to an embodiment.
FIG. 7 is a diagram illustrating a method of determining the first region according to an embodiment.
FIG. 8 is a diagram illustrating a method of determining the first region according to an embodiment.
FIG. 9 is a diagram illustrating a method of performing a binning operation or a remosaic operation according to an embodiment.
FIG. 10 is a flowchart illustrating a method of providing an image according to an embodiment.
FIG. 11 is a diagram illustrating the method of providing the image according to an embodiment.
FIG. 12 is a flowchart illustrating the method of providing the image according to an embodiment.
FIG. 13 is a block diagram of the electronic device according to an embodiment.
FIG. 14 is a block diagram of the electronic device according to an embodiment.
FIG. 15 is a flowchart illustrating the method of providing the image according to an embodiment.
FIG. 16 is a flowchart illustrating the method of providing the image according to an embodiment.
FIG. 17 is a diagram illustrating the method of providing the image according to an embodiment.

### [Mode for Carrying out the Invention]

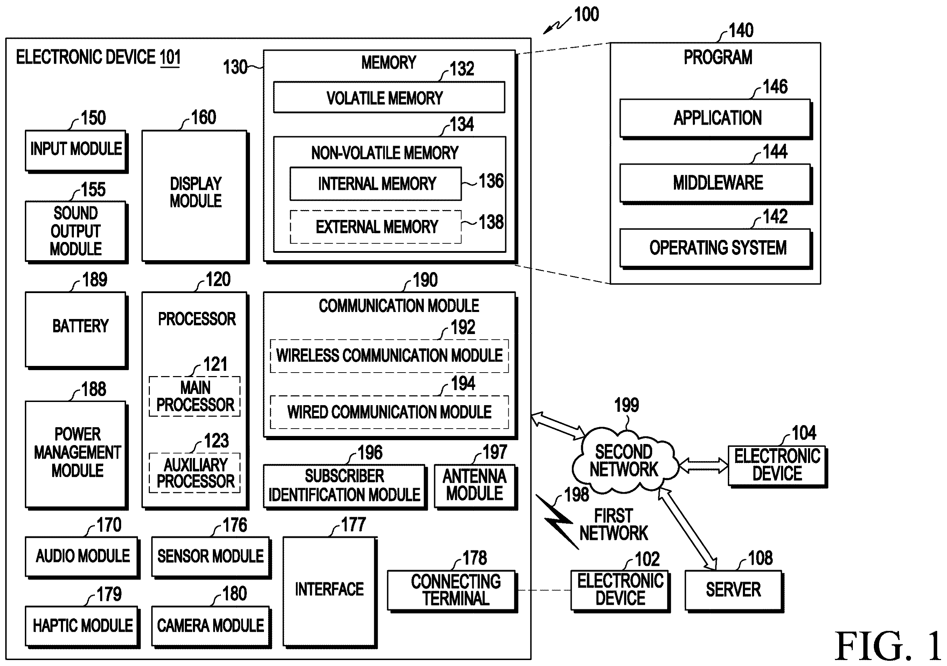

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generaterd by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

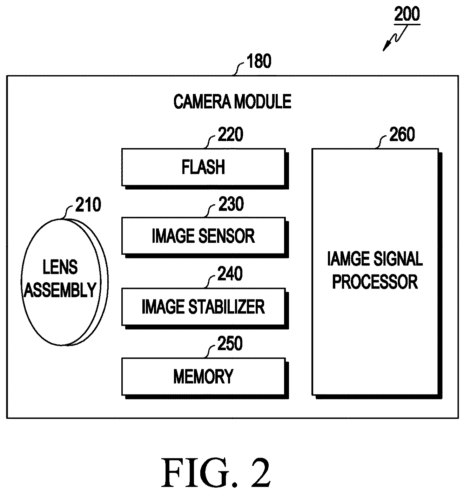

FIG. 2 is a block diagram 200 illustrating the camera module 180 according to various embodiments.

Referring to FIG. 2, the camera module 180 may include a lens assembly 210, a flash 220, an image sensor 230, an image stabilizer 240, a memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 160 may be displayed, by the processor 120, via the display device 260 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

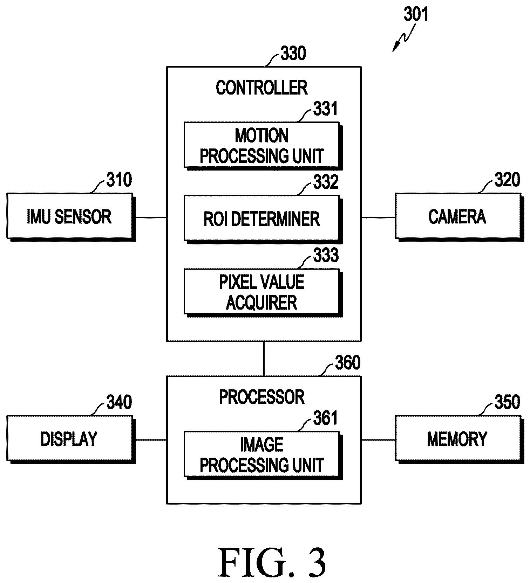

FIG. 3 is a block diagram of an electronic device 301 according to an embodiment.

Referring to FIG. 3, in an embodiment, an electronic device 301 may be the electronic device 301 of FIG. 1.

In an embodiment, the electronic device 301 may include an IMU sensor 310, a camera 320, a controller 330, a display 340, memory 350, and a processor 360.

In an embodiment, the IMU sensor 310 (referred to as an inertial measurement unit (IMU) sensor" or a "motion sensor") may be included in the sensor module 176 of FIG. 1.

In an embodiment, the IMU sensor 310 may acquire sensing data for obtaining information on motion of the electronic device 301. For example, the IMU sensor 310 may acquire sensing data for acquiring the size and/or the direction of motion of the electronic device 301 occurred (or caused) by hand shaking (also referred to as "camera shaking"). For example, the IMU sensor 310 may include a gyro sensor configured to acquire sensing data related to an angular speed of the electronic device 301 (for example, the camera 320) occurred by hand shaking. However, the disclosure is not limited thereto. For example, the IMU sensor 310 may include an acceleration sensor configured to acquire sensing data related to translational motion of the electronic device 301 occurred by hand shaking.

In an embodiment, the camera 320 may be included in the camera module 180 of FIGS. 1 and 2.

In an embodiment, the camera 320 may include an image sensor including a plurality of pixels.

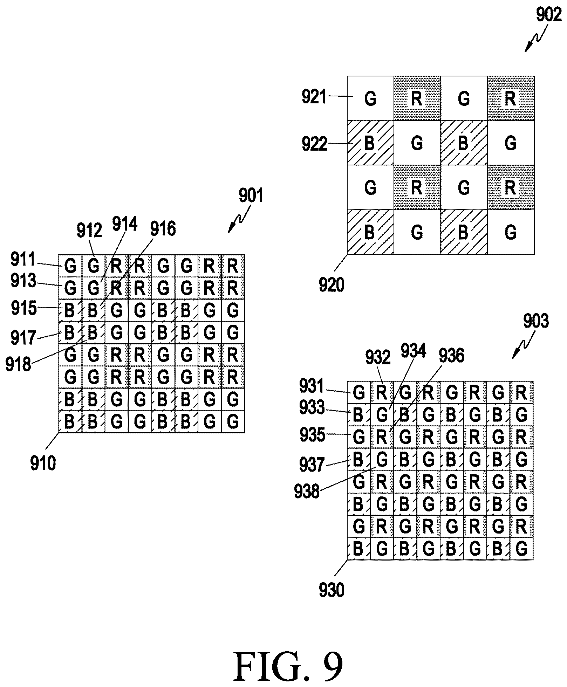

In an embodiment, the image sensor may include a plurality of pixels obtained by grouping adjacent pixels into one pixel (for example, adjacent pixels are grouped in units of one pixel). For example, the image sensor may include a plurality of pixels to perform a binning operation or remosaic operation by grouping four adjacent pixels into one pixel by using tetracell technology. Tetracell technology may also be known as Quad Bayer or 4-cell technology. The binning operation and the remosaic operation are described below in detail with reference to FIG. 9.

In an embodiment, the camera 320 may include a plurality of cameras. For example, the camera 320 may include a first camera configured to acquire an image provided through the display 340 and a second camera configured to acquire an image to be used for hand shaking correction, so as to allow the first camera 320 to acquire the image in which hand shaking is corrected. The second camera may acquire an image for digital image stabilization (hereinafter, referred to as "DIS") of the image to be acquired through the first camera.

In an embodiment, the controller 330 may control the overall operation for providing images. For example, the controller 330 may perform EIS that corrects motion of the electronic device 301 occurred by hand shaking, based on sensing data acquired through the IMU sensor 310. The operation of correcting motion of the electronic device 301 may be referred to as an operation of correcting motion of the electronic device 301.

In an embodiment, the controller 330 may include a motion processing unit 331, an ROI determiner 332, and a pixel value acquirer 333.

In an embodiment, the motion processing unit 331 may acquire (for example, calculate) the size and/or the direction of motion of the electronic device 301 (for example, the camera 320) occurred by hand shaking, based on sensing data acquired from the IMU sensor 310. For example, the motion processing unit 331 may acquire sensing data related to the angular speed from the gyro sensor. The motion processing unit 331 may acquire the size of motion of the electronic device 301 occurred by hand shaking by integrating the angular speed from a time point at which the image sensor included in the camera 320 acquires a first image frame (for example, pixel values) just before to a time point (for example, the current time point) at which a second image frame (for example, an image frame to be currently acquired as an image frame right after the first image frame) is acquired, based on the acquired sensing data. The motion processing unit 331 may acquire the direction of motion of the electronic device 301 occurred by hand shaking, based on the angular speed (for example, the direction indicated by the angular speed). In an embodiment, the size of time between the time point at which the first image frame is acquired and the time point at which the second image frame is acquired may be the same as a reciprocal number of a frame per second (FPS) during which the image sensor acquires the image (for example, a period for which the image frame is acquired as time during which one image frame is acquired). FPS may stand for frames per second, i.e. how many image frames the camera can acquire per second.

In an embodiment, the motion processing unit 331 may acquire (for example, calculate) motion having the size that is the same as the size of motion of the electronic device 301 and having the direction opposite to the direction of motion of the electronic device 301, based on the size and/or the direction of motion of the electronic device 301 (also referred to as the size and/or the direction of motion of the electronic device 301) occurred by hand shaking.

In an embodiment, FIG. 3 illustrates that the controller 330 (for example, the motion processing unit 331) directly acquires sensing data from the IMU sensor 310, but is not limited thereto. For example, when sensing data is directly acquired from the IMU sensor 310 or the IMU sensor 310 provides sensing data to the processor 360, the controller 330 (for example, the motion processing unit 331) may receive the sensing data from the processor 360.

In an embodiment, the ROI determiner 332 may determine a region of interest (ROI) (hereinafter, referred to as a "ROI" or a "first region") for acquiring an image (for example, an image in which hand shaking is corrected) within a region of the image sensor (for example, the entire region of the image sensor). For example, the ROI determiner 332 may identify the size of the ROI determined based on the zoom magnification related to the camera 320. The ROI determiner 332 may determine (for example, calculate) coordinates of the ROI having the identified size (for example, the size of the ROI determined based on the zoom magnification related to the camera 320) within the region of the image sensor, based on motion acquired by the motion processing unit 331, having the size that is the same as the size of motion of the electronic device 301, and having the direction opposite to the direction of motion of the electronic device 301. The coordinates of the ROI may be coordinates of pixels included in the ROI among all pixels of the image sensor. The coordinates of the ROI may include a first coordinate of the pixels included in the ROI among all pixels of the image sensor (for example, a coordinate of a pixel disposed at the leftmost and top side among the pixels included in the ROI in the image sensor) and a last coordinate (for example, a coordinate of a pixel disposed at the rightmost and bottom side among the pixels included in the ROI in the image sensor) sensor.

In an embodiment, the pixel value acquirer 333 may acquire pixel values of the pixels included in the ROI in the image sensor.

In an embodiment, the pixel value acquirer 333 may control at least some of the exposure operation including the photoelectric transformation operation for the pixels included in the ROI, based on the ROI determined by the ROI determiner 332. For example, the pixel value acquirer 333 may configure pixels (or locations of the pixels included in the first region) included in the ROI for which the exposure operation including the photoelectric transformation operation is to be performed (the exposure operation including the photoelectric transformation operation is referred to as the "exposure operation") to perform the photoelectric transformation operation in which only the pixels included in the ROI among the pixels included in the entire region of the image sensor convert the received light (also referred to as an "optical signal") into an electrical signal. In this case, among all pixels included in the entire region of the image sensor, pixels that are not included in the ROI may not perform the photoelectric transformation operation. For example, the pixel value acquirer 333 may configure a register (for example, values of the register) of the camera 320 to perform the exposure operation only for the pixels included in the ROI among the pixels included in the entire region of the image sensor. In an embodiment, the pixel value acquirer 333 may make control to perform the readout operation only for the pixels included in the ROI among all pixels included in the entire region of the image sensor. For example, the photoelectric transform operation may be performed for the pixels included in the ROI and the readout operation of acquiring pixels values may be performed for the pixels included in the ROI among all pixels included in the entire region of the image sensor. The photoelectric transform operation may not be performed for the pixels which are not included in the ROI and the readout operation of acquiring pixels values may not be performed for the pixels which are not included in the ROI among all pixels included in the entire region of the image sensor.

In an embodiment, the pixel value acquirer 333 may acquire pixels values of the pixels included in the ROI by controlling at least some of the exposure operation for the pixels included in the ROI. For example, the pixel value acquirer 333 may acquire pixel values of the pixels included in the ROI through the exposure operation and the readout operation for the pixels included in the ROI.

In an embodiment, the pixel value acquirer 333 may provide the processor 360 with the acquired pixel values of the pixels included in the ROI.

In an embodiment, the pixel value acquirer 333 may acquire pixel values having a Bayer pattern by performing the binning operation or the remosaic operation for the pixel values of the pixels included in the ROI. The pixel value acquirer 333 may provide the processor 360 with pixel values having the Bayer pattern. However, the disclosure is not limited thereto. For example, the pixel value acquirer 333 may provide the processor 360 with pixel values having a non-Bayer pattern rather than the Bayer pattern.

In an embodiment, FIG. 3 illustrates that the motion processing unit 331, the ROI determiner 331, and the pixel value acquirer 333 included in the controller 330 are independent from each other, but is not limited thereto. For example, at least some of the motion processing unit 331, the ROI determiner 331, and the pixel value acquirer 333 included in the controller 330 may be implemented in the independent or integrated type.

In an embodiment, the controller 330 may be implemented independently from the camera 320 or may be included in the camera 320.

In an embodiment, the processor 360 may be included in the processor 120 of FIG. 1.

In an embodiment, the processor 360 may include an application processor. However, the disclosure is not limited thereto. For example, the processor 360 may include one or more processors 360 (for example, an application processor and an image signal processor (ISP)).).

In an embodiment, the processor 360 may include an image processing unit 361.

In an embodiment, the image processing unit 361 may perform the interpolation operation for generating an image (RGB image) to be displayed through the display 340, based on pixel values having the Bayer pattern being received from the controller 330 (for example, the pixel value acquirer). The image processing unit 361 may convert pixel values having the non-Bayer pattern into pixel values having the Bayer pattern, based on pixel values having the non-Bayer pattern being received from the controller 330 (for example, the pixel value acquirer). The image processing unit 361 may perform the interpolation operation for generating the RGB image, based on the converted pixel values.

However, the operation performed by the image processing unit 361 is not limited to the interpolation operation. For example, for the image (for example, RGB image), the image processing unit 361 may perform tone mapping, color correction, gamma correction, noise cancelling operation (for example, noise cancelling operation using a spatial filter and/or a temporal filter), lens shading correction, white balance control, color space conversion, and/or gamut control.

In an embodiment, the display 340 may be included in the display module 160 of FIG. 1.

In an embodiment, the display 340 may display the image processed by the processor 360. For example, when pixel values of the pixels included in the ROI are acquired in units of image frames by the controller 330, the display 340 may display a preview image acquired as the processor 360 processes the acquired pixel values.

In an embodiment, the memory 350 may be included in the memory 130 of FIG. 1.

In an embodiment, the memory 350 may store information for performing the operation of providing an image.

In an embodiment, the memory 350 may store instructions that, when executed by at least one of at least one controller (e.g., the controller 330) or at least one processor (e.g., the processor 360), cause the electronic device 301 to perform operations described referring FIG. 3 to FIG. 12.

In an embodiment, FIG. 3 illustrates that the memory 350 is connected to the processor 360, but is not limited thereto. For example, the memory 350 may be connected to the controller 330 and/or the camera 320.

In an embodiment, FIG. 3 illustrates that the memory 350 is independent from the processor 360, the controller 330, and the camera 320, but is not limited thereto. For example, the memory 350 may be included in the processor 360, the controller 330, and/or the camera 320.

In an embodiment, FIG. 3 illustrates that the electronic device 301 includes the IMU sensor 310, the camera 320, the controller 330, the display 340, the memory 350, and the processor 360, but is not limited thereto. For example, the electronic device 301 may further include one or more component among the components included in the electronic device 101 of FIG. 1. For example, the electronic device 301 may not include some of the components illustrated in FIG. 3 (for example, the display 340).

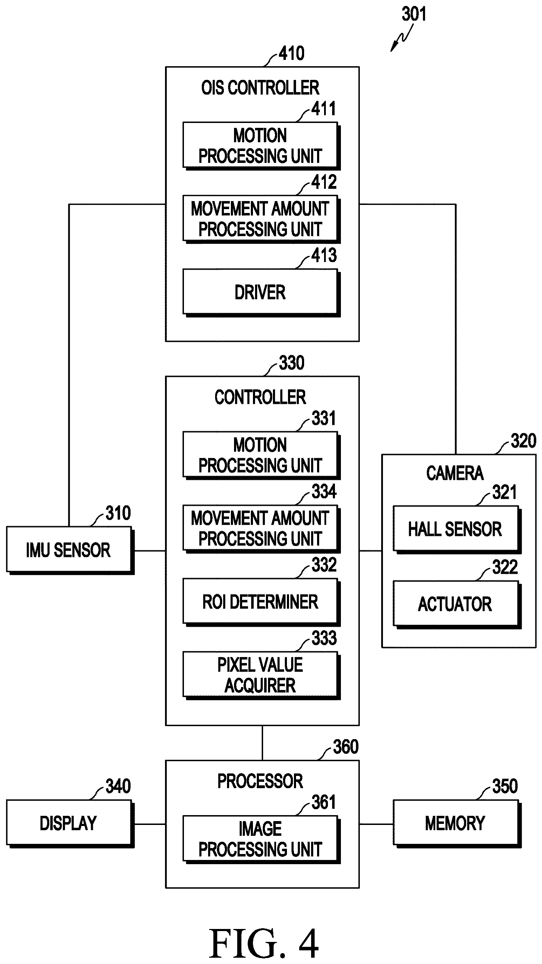

FIG. 4 is a block diagram of the electronic device 301 according to an embodiment.

Referring to FIG. 4, in an embodiment, the electronic device 301 may include components for performing OIS as well as components for performing EIS, based on sensing data acquired through the IMU sensor 310. For example, in comparison between FIGS. 3 and 4, the electronic device 301 of FIG. 4 may further include an OIS controller 410 compared to the electronic device 301 of FIG. 3.

In an embodiment, the electronic device 301 may include the IMU sensor 310, the camera 320, the controller 330, the display 340, the memory 350, the processor 360, and a controller 410.

In an embodiment, since the IMU sensor 310 is substantially the same as the IMU sensor 310 of FIG. 3, overlapping description thereof is omitted.

In an embodiment, the IMU sensor 310 may provide the sensing data acquired by the IMU sensor 310 not only to the controller 330 but also to the OIS controller 410.

In an embodiment, since the camera 320 is substantially the same as the camera 320 of FIG. 3, overlapping description thereof is omitted.

In an embodiment, the camera 320 may further include a Hall sensor 321 and an actuator 322 (also referred to as an "OIS actuator") configured to support OIS as well as the image sensor.

In an embodiment, the Hall sensor 321 may be a sensor configured to acquire the location of a lens (for example, a lens assembly) and/or the location of the image sensor included in the camera 320. For example, the Hall sensor 321 may be disposed in the actuator 322 in which OIS coils are arranged. The Hall sensor 321 may detect the location of the lens (for example, the lens assembly) and/or the location of the image sensor (or the location of the actuator 322) by detecting a magnetic field generated by the magnet disposed on an OIS carrier that accommodates the lens and/or the image sensor by the OIS coils. However, the sensor configured to acquire the location of the lens (for example, the lens assembly) and/or the location of the image sensor included in the camera 320 is not limited to the Hall sensor 321.

In an embodiment, after acquiring sensing data related to the location of the lens and/or the location of the image sensor, the Hall sensor 321 may transfer the acquired sensing data to the OIS controller 410 and the controller 330.

In an embodiment, the actuator 322 may change the location of the lens and/or the location of the image sensor in order to perform OIS by the control of the OIS controller 410.

In an embodiment, the actuator 322 may change the location of the lens and/or the location of the image sensor (for example, move the lens and/or the image sensor) through a shape memory alloy (SMA) method, a piezo method, a method using a step motor, or a method using micro electro mechanical systems (MEMS) as well as a method using the OIS coils and magnet (referred to as a "voice coil motor (VCM) method").

In an embodiment, the lens and/or the image sensor included in the camera 320 may be moved by the control of the OIS controller 410. For example, the OIS controller 410 may control the actuator 322 to shift the lens, shift the image sensor, or tilt the lens or the image sensor in a direction opposite to motion of the electronic device 301 occurred by hand shaking.

In an embodiment, the OIS controller 410 may control OIS. For example, the OIS controller 410 may perform OIS, based on sensing data acquired from the IMU sensor 310 and sensing data acquired from the Hall sensor 321.

In an embodiment, the OIS controller 410 may include a motion processing unit 411, a movement amount processing unit 412, and a driver 413.

In an embodiment, the motion processing unit 411 may acquire (for example, calculate) the size and/or the direction of motion of the electronic device 301 (for example, the camera 320) occurred by hand shaking, based on sensing data acquired from the IMU sensor 310. For example, the motion processing unit 411 may acquire sensing data related to the angular speed from the gyro sensor.

In an embodiment, the motion processing unit 411 may acquire (for example, calculate) motion having the size that is the same as the size of motion of the electronic device 301 and having the direction opposite to the direction of motion of the electronic device 301, based on the size and/or the direction of motion of the electronic device 301 occurred by hand shaking.

In an embodiment, the motion processing unit 411 may calculate the location of a target of the lens and/or the image sensor, based on motion having the direction opposite to the direction of motion of the electronic device 301. For example, when OIS is performed using the method of shifting the lens, the motion processing unit 411 may calculate the location of the target (hereinafter, referred to as the "target location") as the final location to which the lens is to be moved for OIS in the state in which the lens and the image sensor are arranged based on an optical axis (for example, the state in which the lens and the image sensor are arranged to put the center of the lens and the center of the image sensor on the optical axis).

In an embodiment, the movement amount processing unit 412 may acquire the location of the lens and/or the location of the image sensor, based on sensing data provided from the Hall sensor 321. For example, when OIS is performed using the method of shifting the lens, the movement amount processing unit 412 may acquire the current location of the lens.

In an embodiment, the movement amount processing unit 412 may calculate the distance and the direction in which the lens and/or the image sensor is to be moved based on the location of the target, the location of the lens, and/or the location of the image sensor (for example, the current location of the lens) calculated by the motion processing unit 411. For example, the movement amount processing unit 412 may calculate the distance (for example, the distance to shift the lens) and the direction in which the lens moves based on the location of the target of the lens and the current location of the lens.

In an embodiment, the driver 413 may control the actuator 322, based on the distance and the direction calculated by the movement amount processing unit 412. For example, the driver 413 may control the actuator 322 to move the lens by the distance and the direction calculated by the movement amount processing unit 412 (for example, to move the lens by the distance and the direction calculated by the movement amount processing unit 412 from the current location). In an embodiment, the driver 413 may be implemented as a driver integrated circuit (IC). However, the disclosure is not limited thereto.

In an embodiment, FIG. 4 illustrates that the OIS controller 410 is independent from the controller 330, the camera 320, and the processor 360, but is not limited thereto. For example, the OIS controller 410 may be included in the camera 320 or the processor 360 or may be implemented to be integrated with the controller 330.

In an embodiment, the controller 330 may include the motion processing unit 331, the movement amount processing unit 334, the ROI determiner 332, and the pixel value acquirer 333.

In an embodiment, since the motion processing unit 331 has been described with reference to FIG. 3, detailed description thereof is omitted.

In an embodiment, the movement amount processing unit 334 may acquire the location of the lens and/or the location of the image sensor, based on sensing data provided from the Hall sensor 321. For example, when OIS is performed using the method of shifting the lens, the movement amount processing unit 334 may acquire the current location of the lens.

In an embodiment, since the ROI determiner 332 performs substantially the same operation as the ROI determiner 332 of FIG. 3, overlapping description is omitted.

In an embodiment, the ROI determiner 332 may determine the ROI for acquiring an image in which hand shaking is corrected within the region of the image sensor, based on information acquired from the motion processing unit 331 and at least some of the information acquired from the movement amount processing unit 334. For example, the ROI determiner 332 may acquire motion having the size that is the same as the size of motion of the electronic device 301 occurred by hand shaking and having the direction opposite to the direction of motion of the electronic device 301 from the motion processing unit 331. The ROI determiner 332 may acquire the location of the lens and/or the location of the image sensor (for example, the current location of the lens) from the movement amount processing unit 334. The ROI determiner 332 may calculate coordinates of the ROI, based on motion having the direction opposite to the direction of motion of the electronic device 301 in consideration of the location of the lens and/or the location of the image sensor.

In an embodiment, the period at which OIS of correcting hand shaking is performed by moving the location of the lens and/or the location of the image sensor may be shorter than the period at which EIS of correcting tremor is performed based on sensing data acquired through the IMU sensor 310. The ROI determiner 332 may determine the ROI to correct motion of the electronic device 301 (for example, motion changed during the time from a time point right before a time point at which the image sensor acquires an image frame to a time point at which the image frame is acquired) occurred by hand shaking in consideration of the location of the lens and/or the location of the image sensor acquired at a time point at which the ROI is determined (for example, the current location of the moved lens through OIS performed at a time point right before the time point at which the ROI is determined).

In an embodiment, the above embodiments describe that the ROI determiner 332 determines the ROI, based on the motion having the direction opposite to the direction of motion of the electronic device 301 in consideration of the location of the lens and/or the current location of the image sensor, but is not limited thereto. For example, the ROI determiner 332 may acquire the average of locations of the lens and/or locations of the image sensor during the time from the time point right before the time point at which the image sensor acquires the image frame to the time point at which the image from is acquired (for example, the average location of locations of the lens calculated during the time from the time point right before the time point at which the image sensor acquires the image frame to the time point at which the image from is acquired) from the movement amount processing unit 334. The ROI determiner 332 may determine the ROI, based on motion having the direction opposite to the direction of motion of the electronic device 301 in consideration of the acquired average of the locations of the lens and/or the locations of the image sensor.

In an embodiment, since the pixel value acquirer 333 performs substantially the same operation as the operation performed by the pixel value acquirer 333 of FIG. 3, detailed description thereof is omitted.

In an embodiment, since the display 340, the memory 350, and the processor 360 are substantially the same as the display 340, the memory 350, and the processor 360 of FIG. 3, detailed description thereof is omitted.

In an embodiment, FIG. 4 illustrates that the electronic device 301 performs EIS in consideration of OIS performed based on sensing data acquired through the IMU sensor 310 and sensing data acquired from the Hall sensor 321, but is not limited thereto. In an embodiment, the electronic device 301 may independently perform OIS and EIS. For example, the OIS controller 410 may perform the OIS performed based on the sensing data acquired through the IMU sensor 310 and the sensing data acquired from the Hall sensor 321. The controller 330 may perform the EIS, based on the sensing data acquired from the IMU sensor 310 regardless of the OIS performed by the OIS controller 410 (for example, determine the ROI, based on the sensing data acquired from the IMU sensor 310).

In an embodiment, the electronic device 301 may perform in a first mode in which the EIS is performed as described with reference to FIG. 3, a second mode in which the EIS is performed in consideration of the OIS as described with reference to FIG. 4, or a third mode in which the OIS and the EIS are independently performed. For example, the electronic device 301 may determine the ROI in the first mode, the second mode, or the third mode and acquire pixel values (for example, image data in which hand shaking is corrected) of the pixels included in the ROI.

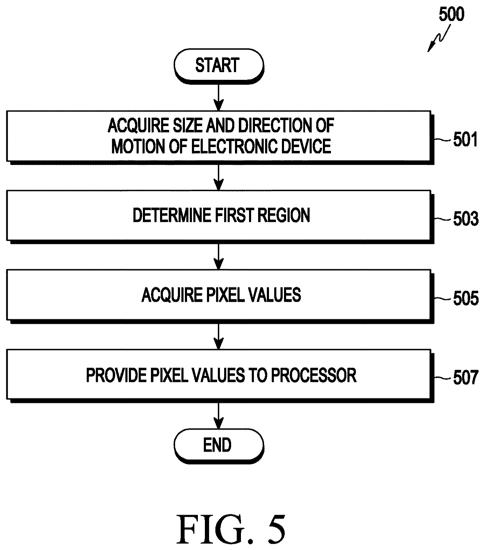

FIG. 5 is a flowchart 500 illustrating a method of providing an image according to an embodiment.

In an embodiment, FIG. 5 may be a drawing for illustrating operations performed to provide the image by the electronic device 301 of FIG. 3.

In the following embodiments, respective operations may be sequentially performed but the sequential performance is not necessary. For example, orders of the operations may be changed, and at least two operations may be performed in parallel.

Referring to FIG. 5, in operation 501, in an embodiment, the controller 330 may acquire the size and the direction of motion of the electronic device 301 occurred by hand shaking, based on sensing data acquired through the IMU sensor 310 while a camera application is executed.

In an embodiment, the controller 330 may acquire (for example, calculate) the size and/or the direction of motion of the electronic device 301 (for example, the camera 320) occurred by hand shaking, based on sensing data acquired from the IMU sensor 310, based on the camera application being executed. For example, the controller 330 may acquire sensing data related to the angular speed from the gyro sensor. The controller 330 may acquire the size of motion of the electronic device 301 occurred by hand shaking by integrating the angular speed from a time point at which the image sensor included in the camera 320 acquires a first image frame (for example, pixel values) just before to a time point (for example, the current time point) at which a second image frame (for example, an image frame to be currently acquired as an image frame right after the first image frame) is acquired, based on the acquired sensing data. The controller 330 may acquire the direction of motion of the electronic device 301 occurred by hand shaking, based on the angular speed. In an embodiment, the size of time between the time point at which the first image frame is acquired and the time point at which the second image frame is acquired may be the same as a reciprocal number of a frame per second (FPS) during which the image sensor acquires the image frame (for example, a period for which the image frame is acquired).

In operation 503, in an embodiment, the controller 330 may determine a first region (ROI) for acquiring an image within the regions of the image sensor, based on the size and the direction of motion of the electronic device 301.

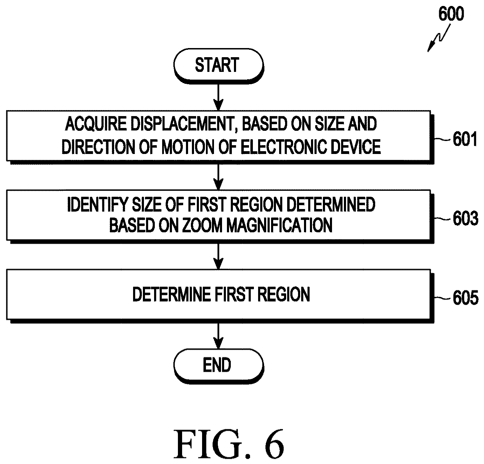

In an embodiment, the controller 330 may acquire (for example, calculate) motion having the size that is the same as the size of motion of the electronic device 301 and having the direction opposite to the direction of motion of the electronic device 301, based on the size and/or the direction of motion of the electronic device 301 occurred by hand shaking. The controller 330 may determine the first region, based on motion having the size which is the same as the size of motion of the electronic device 301 occurred by hand shaking and having the direction opposite to the direction of motion of the electronic device 301. Hereinafter, the operation of determining the first region is described in more detail with reference to FIGS. 6 to 8.

FIG. 6 is a flowchart 600 illustrating a method of determining a first region according to an embodiment.

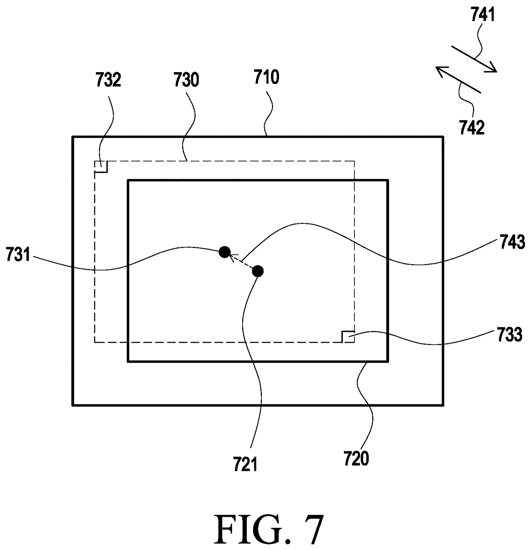

FIG. 7 is a diagram illustrating a method of determining a first region according to an embodiment.

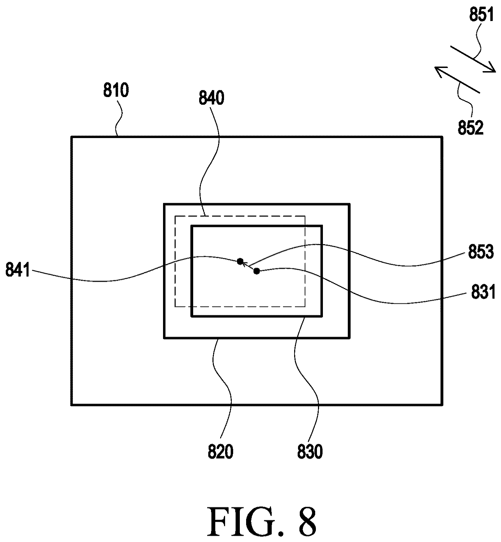

FIG. 8 is a diagram illustrating a method of determining a first region according to an embodiment.

In the following embodiments, respective operations may be sequentially performed but the sequential performance is not necessary. For example, orders of the operations may be changed, and at least two operations may be performed in parallel.

Referring to FIGS. 6 to 8, in operation 603, in an embodiment, the controller 330 may acquire (for example, calculate) displacement, based on the size and the direction of motion of the electronic device 301.

In operation 603, in an embodiment, the controller 330 may identify the size of the first region (ROI) determined based on the zoom magnification (hereinafter, referred to as the "zoom magnification") related to the camera 320.

In operation 605, in an embodiment, the controller 330 may determine the first region within the entire region of the image sensor, based on the displacement acquired in operation 603 and the size of the first region (ROI) identified in operation 603.

FIG. 6 illustrates that operation 601 precedes operation 603, but is not limited thereto. Operation 603 may precede operation 601 or operations 601 and 603 may be performed in parallel. Hereinafter, the operation of determining the first region is described in more detail with reference to FIGS. 7 and 8.

In an embodiment, FIG. 7 may be a diagram illustrating the operation of determining the first region within the entire region of the image sensor when the zoom magnification related to the camera 320 is 1.0x.

In an embodiment, in FIG. 7, an arrow 741 indicates the size and the direction of motion of the electronic device 301 occurred by hand shaking and an arrow 742 may indicate motion having the size that is the same as the size of motion of the electronic device 301 occurred by hand shaking and the direction opposite to the direction of motion of the electronic device 301. For example, the size (for example, the length) of the arrow 742 may be the same as the size (for example, the length) of the arrow 741. The direction of the arrow 742 may be opposite to the direction of the arrow 741.

In an embodiment, the controller 330 may calculate displacement (hereinafter, referred to as "displacement") corresponding to the motion having the size that is the same as the size of motion of the electronic device 301 occurred by hand shaking and having the direction opposite to the direction of motion of the electronic device 301. For example, in FIG. 7, the controller 330 may calculate displacement indicated by an arrow 743.

In an embodiment, the displacement may include the distance and the direction for moving a region 720 (hereinafter, referred to as a "second region") having the size determined based on the zoom magnification (for example, having the same center as the center 721 of the entire region 710 of the image sensor) relative to the center 721 of the entire region 710 of the image sensor in order to correct (referred to as "compensate for) motion of the electronic device 301 occurred by hand shaking.

In an embodiment, the direction of displacement may be a direction opposite to the direction of motion of the electronic device 301 occurred by hand shaking. In an embodiment, the size of displacement may correspond to the size of motion of the electronic device 301 occurred by hand shaking. The size of displacement may increase as the size of displacement may correspond to the size of motion of the electronic device 301 occurred by hand shaking increases, and the size of displacement may decrease as the size of displacement may correspond to the size of motion of the electronic device 301 occurred by hand shaking decrease.

In an embodiment, the controller 330 may identify the size of the first region determined based on the zoom magnification. The size of the first region may be the same as the size of the second region.

In an embodiment, in FIG. 7, when the zoom magnification is 1.0x, the size of the second region 720 may be determined in consideration of a margin region (hereinafter, referred to as the "margin region") (for example, the remaining regions except for the second region 720 in the entire region 710 of the image sensor) for correcting hand shaking in the entire region 710 of the image sensor. For example, the size of the second region 720 may be calculated by multiplying the entire region 710 of the image sensor corresponding to 1 magnification as the zoom magnification and a ratio related to the margin region (for example, a ratio for configuring the margin region to the entire region of the image sensor).

In an embodiment, the operation of calculating the size of the second region 720 (or the operation of calculating the size of the first region 730) may be performed by the processor 360 (for example, the application processor) or the controller 330. For example, the processor 360 (for example, the application processor) may calculate the size of the second region, based on the zoom magnification configured based on a user input (or configured by default). The controller 330 may identify the size of the second region (and/or the first region) by receiving the size of the second region calculated by the processor 360 from the processor 360. For example, the controller 330 may receive the zoom magnification from the processor 360. The controller 330 may identify the size of the second region (and/or the first region) by acquiring (for example, calculating) the size of the second region (and/or the first region), based on the zoom magnification received from the processor 360.

In an embodiment, the controller 330 may determine the first region, based on the size and the displacement of the first region. For example, in FIG. 7, the controller 330 may determine the first region 730 having, as the center 731, the location moved by the displacement indicated by the arrow 743 from the location of the center 721 of the second region 721 and having the size that is the same as the size of the second region 720, based on the center 731.

In an embodiment, FIG. 8 may be a diagram illustrating the operation of determining the first region within the entire region of the image sensor when the zoom magnification related to the camera 320 is 2.0x.

In an embodiment, in FIG. 8, an arrow 851 indicates the size and the direction of motion of the electronic device 301 occurred by hand shaking and an arrow 852 may indicate motion having the size that is the same as the size of motion of the electronic device 301 occurred by hand shaking and the direction opposite to the direction of motion of the electronic device 301. For example, the size (for example, the length) of the arrow 852 may be the same as the size (for example, the length) of the arrow 851. The direction of the arrow 852 may be opposite to the direction of the arrow 851.

In an embodiment, the controller 330 may calculate displacement corresponding to motion having the size that is the same as the size of motion of the electronic device 301 occurred by hand shaking and having the direction opposite to the direction of motion of the electronic device 301. For example, in FIG. 8, the controller 330 may calculate displacement indicated by an arrow 853.

In an embodiment, in FIG. 8, when the zoom magnification is 2.0x, the size of the second region 830 may be determined in consideration of the margin region for the size of a third region 820 corresponding to the zoom magnification 2.0x. For example, when the zoom magnification is 2.0x, the third region 820 having about 1/4 size compared to the size of the entire region 810 of the image sensor. The size of the second region 830 may be determined by multiplying the third region 820 and a ratio related to the margin region.

In an embodiment, the operation of calculating the size of the second region 830 (or the operation of calculating the size of the first region 840) may be performed by the processor 360 (for example, the application processor) or the controller 330.

In an embodiment, the controller 330 may determine the first region, based on the size and the displacement of the first region. For example, in FIG. 8, the controller 330 may determine the first region 841 having, as the center 841, the location moved by the displacement indicated by the arrow 853 from the location of the center 830 of the second region 831 and having the size that is the same as the size of the second region 830, based on the center 840.

Referring to FIG. 5, in an embodiment, the operation of determining the first region may include an operation of determining coordinates of the first region within the entire region of the image sensor.

In an embodiment, the coordinates of the first region may be coordinates of pixels included in the first region among all pixels of the image sensor.

In an embodiment, the coordinates of the first region may include a first coordinate (for example, a coordinate of a pixel 732 arranged on the leftmost and top side among the pixels included in the first region 730 in the coordinate system for the entire region 710 of the image sensor in FIG. 7) and a last coordinate (for example, a coordinate of a pixel 733 arranged on the rightmost and bottom side among the pixels included in the first region 730 in the coordinate system for the entire region 710 of the image sensor in FIG. 7) of the pixels included in the first region among all pixels of the image sensor.

In operation 505, in an embodiment, the controller 330 may acquire pixel values of the pixels included in the first region. For example, the controller 330 may acquire only pixel values of the pixels included in the first region.

In an embodiment, the controller 330 may control at least some of the exposure operation including the photoelectric transformation operation for the pixels included in the first region, based on the first region determined through operation 503. For example, the controller 330 may configure pixels included in the first region (or locations of the pixels included in the first region) for which the exposure operation including the photoelectric transformation operation is to be performed so as to perform the photoelectric transformation operation in which only the pixels included in the first region among the pixels included in the entire region of the image sensor convert received light into an electrical signal. In this case, among all pixels included in the entire region of the image sensor, pixels that are not included in the ROI may not perform the photoelectric transformation operation. For example, the controller 330 may configure a register (for example, values of the register) of the camera 320 to perform the exposure operation only for the pixels included in the first region among the pixels included in the entire region of the image sensor. In an embodiment, the controller 330 may make control to perform the readout operation only for the pixels included in the ROI among all pixels included in the entire region of the image sensor. For example, the photoelectric transform operation may be performed for the pixels included in the ROI and the readout operation of acquiring pixels values may be performed for the pixels included in the ROI among all pixels included in the entire region of the image sensor. The photoelectric transform operation may not be performed for the pixels which are not included in the ROI and the readout operation of acquiring pixels values may not be performed for the pixels which are not included in the ROI among all pixels included in the entire region of the image sensor.

In an embodiment, the controller 330 may acquire pixel values of the pixels included in the first region by controlling at least some of the exposure operation for the pixels included in the first region. For example, the controller 330 may acquire pixel values of the pixels included in the first region through the exposure operation and the readout operation for the pixels included in the first region.

In an embodiment, the controller 330 may acquire pixel values having a Bayer pattern by performing the binning operation or the remosaic operation for the pixel values of the pixels included in the first region. Hereinafter, a method of performing the binning operation or the remosaic operation for the pixel values of the pixels included in the first region is described.

FIG. 9 is a diagram illustrating the method of performing the binning operation or the remosaic operation according to an embodiment.

Referring to FIG. 9, in an embodiment, as indicated by reference numeral 901, reference numeral 910 may indicate an image sensor including a plurality of pixels obtained by grouping four adjacent pixels into one pixel by using tetracell technology. In an embodiment, as indicated by reference numeral 910, the image sensor 910 may include pixels such that four pixels correspond to one same color filter. For example, as indicated by reference numeral 910, the image sensor 910 may include pixels including adjacent pixels 911, 912, 913, and 914 correspond to a green (G) color filter and adjacent pixels 915, 916, 917, and 918 correspond to a blue (B) color filter.

Reference numeral 910 indicates the image sensor 910 including pixels obtained by grouping four adjacent pixels into one pixel, but is not limited thereto. For example, the image sensor may include pixels obtained by grouping a plurality of adjacent pixels into one pixel, like nine adjacent pixels or sixteen adjacent pixels.

In an embodiment, based on settings configured in the electronic device 301 and/or an environment of the electronic device 301, the controller 330 may perform the binning operation or the remosaic operation for the pixel values of the pixels included in the first region.

In an embodiment, the binning operation may include an operation of converting pixel values of four adjacent pixels into one pixel within the image sensor. For example, reference numeral 902 may indicate pixel values 920 acquired by the binning operation for the image sensor 910 (for example, pixels values of the pixels included in the image sensor 910). With reference to reference numerals 901 and 902, it is possible to acquire a pixel value of one pixel value 921 corresponding to a G color filter (for example, corresponding to four pixels 911, 912, 913, and 914) by adding pixel values of the four adjacent pixels 911, 912, 913, and 914 corresponding to the G color filter as the part of the binning operation for the image sensor 910. It is possible to acquire a pixel value of one pixel value 922 corresponding to the B color filter by adding pixel values of the four adjacent pixels 915, 916, 917, and 918 corresponding to the B color filter as the part of the binning operation for the image sensor 910. However, the disclosure is not limited thereto. For example, it is possible to acquire a pixel value of one pixel value 921 corresponding to the G color filter (for example, corresponding to four pixels 911, 912, 913, and 914) by averaging pixel values of the four adjacent pixels 911, 912, 913, and 914 corresponding to the G color filter as the part of the binning operation for the image sensor 910. It is possible to acquire a pixel value of one pixel value corresponding to the B color filter by averaging pixel values of the four adjacent pixels 915, 916, 917, and 918 corresponding to the B color filter as the part of the binning operation for the image sensor 910.

In an embodiment, the binning operation of acquiring the pixel value corresponding to adjacent pixels by adding pixel values of the adjacent pixels may allow the electronic device 301 in a low-illumination environment to acquire a brighter image. The binning operation of acquiring the pixel value corresponding to adjacent pixels by averaging pixel values of the adjacent pixels may allow the electronic device 301 to acquire an image having lower noise.

In an embodiment, reference numeral 903 may indicate pixel values 930 acquired by the remosaic operation for the image sensor 910 (for example, the pixel values of the pixels included in the image sensor 910). For example, it is possible to acquire a pixel value of a pixel 933 and a pixel value of a pixel 935 as indicated by reference numeral 903 by rearranging (also referred to as "reordering") the pixel value of the pixel 913 and the pixel value of the pixel 915 of the image sensor 910 as indicated by reference numeral 901. It is possible to acquire values of the pixels 930 having the Bayer pattern by performing the remosaic operation of changing locations of the pixel values of the pixels of the image sensor 910. For example, as indicated by reference numeral 903, the pixels 931, 932, 933, and 934 and the pixels 935, 936, 937, and 938 may have the Bayer pattern. However, the method of performing the remosaic operation is not limited to an operation of reordering some of the pixel values of the pixels described above.

In an embodiment, the remosaic operation may allow the electronic device 301 to acquire an image having higher resolution when the zoom magnification increases. For example, when the zoom magnification is 1.0x, the controller 330 may acquire an image having A resolution (for example, about 12 MP) (for example, image data including the number of pixel values corresponding to A resolution). When the zoom magnification is 2.0x, the controller 330 may acquire an image (for example, pixel values constituting the image) having A resolution (for example, about 12 MP) that is substantially the same as the case where the zoom magnification is 1.0x by performing the remosaic operation for pixel values acquired from the pixels included in the first region.

Referring to FIG. 5, in operation 507, in an embodiment, the controller 330 may provide the processor 360 with the pixel values acquired through operation 505.

In an embodiment, when the binning operation or the remosaic operation is performed for the pixel values of the pixels included in the first region, the controller 330 may provide the processor 360 (for example, the application processor or an ISP) with pixel values acquired by the binning operation or the remosaic operation and having the Bayer pattern.

In an embodiment, the controller 330 may provide the processor 360 with pixel values having the non-Bayer pattern rather than the Bayer pattern.

In an embodiment, although not illustrated in FIG. 5, the processor 360 may perform the interpolation operation for generating an image (RGB image) to be displayed through the display 340, based on pixel values having the Bayer pattern being received from the controller 330. The processor 360 may convert pixel values having the non-Bayer pattern into pixel values having the Bayer pattern, based on the pixel values having the non-Bayer pattern being received from the controller 330. The processor 360 may perform the interpolation operation for generating the RGB image, based on the converted pixel values.

In an embodiment, for the image (for example, the RGB image), the processor 360 may perform tone mapping, color correction, gamma correction, noise cancelling operation (for example, noise cancelling operation using a spatial filter and/or a temporal filter), lens shading correction, white balance control, color space conversion, and/or gamut control.

In an embodiment, the processor 360 may display the image (for example, the RGB image) through the display 340. For example, the processor 360 may receive pixel values from the controller 330 in every period corresponding to the FPS configured in the camera 320. The processor 360 may acquire the image to be displayed through the display 340 by performing at least some of the operations (for example, the interpolation operation), based on the received pixel values. The processor 360 may display the acquired image through the display 340 as a preview image.

In an embodiment, as the controller 330 transfers pixel values of the pixels included in the first region that does not include the margin region to the processor 360, pixel values having the smaller amount of data to the processor 360 compared to the comparative example in which pixel values of the pixels included in the regions including the margin region are transferred to the processor 360. Further, as the controller 330 transfers the pixel values of the pixels included in the first region that does not include the margin region to the processor 360, a plurality of crop operations may not be performed. Accordingly, smaller resources may be used and power consumption of the electronic device 301 may be reduced.

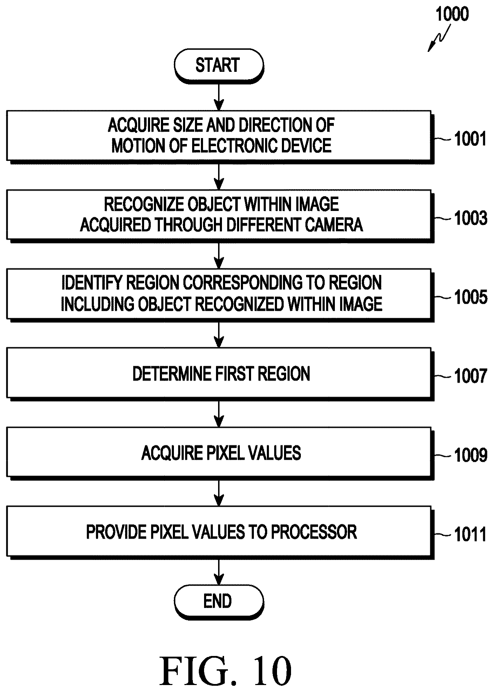

FIG. 10 is a flowchart 1000 illustrating a method of providing an image according to an embodiment.

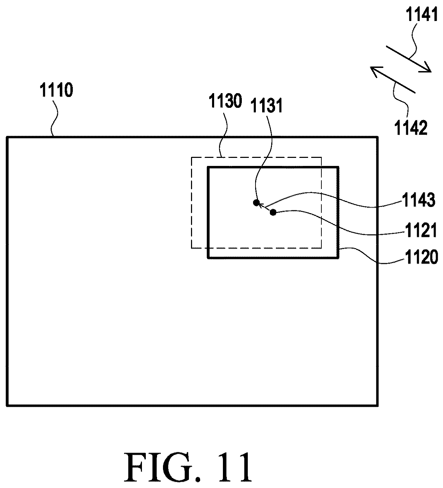

FIG. 11 is a diagram illustrating the method of providing the image according to an embodiment.

In the following embodiments, respective operations may be sequentially performed but the sequential performance is not necessary. For example, orders of the operations may be changed, and at least two operations may be performed in parallel.

Referring to FIGS. 10 and 11, in operation 1001, in an embodiment, the controller 330 may acquire the size and the direction of motion of the electronic device 301 occurred by hand shaking, based on sensing data acquired through the IMU sensor 310 while an application of the camera 320 is executed.

Since operation 1001 is the same as or similar to at least some of operation 501 of FIG. 5, detailed description thereof is omitted.

In operation 1003, in an embodiment, the controller 330 may recognize an object corresponding to a subject within an image acquired through another camera.

In an embodiment, the controller 330 may acquire an image through a camera (hereinafter, referred to as a "second camera") different from the camera 320 (hereinafter, referred to a "first camera") including an image sensor to acquire pixel values of pixels (for example, the pixel values to be acquired through operation 1009). The controller 330 may detect the object (hereinafter, referred to an "object") corresponding to the subject within the image acquired through the second camera by using a predetermined algorithm or artificial intelligence model. For example, the second camera may be configured to have a larger FPS than an FPS of the first camera (for example, such that a period at which the first camera acquires an image frame is shorter than a period at which the second camera acquires an image frame). The controller 330 may identify the image acquired through the second camera at a time point that is substantially the same as the time point at which the first camera acquires an image (for example, pixel values of pixels to be included in the first region in the image sensor) or the latest time point among time points at which the second camera acquires images (for example, image frames). The controller 330 may recognize the object within the identified image.

In operation 1005, in an embodiment, the controller 330 may identify a region (hereinafter, referred to as a "fourth region") corresponding to the region including the recognized object within the image (for example, the image acquired through the second camera) (hereinafter, referred to as a "first image") within the regions of the image sensor (for example, the image sensor of the first camera).

In an embodiment, the controller 330 may identify the fourth region corresponding to the region including the object (for example, the object recognized in operation 1003) within the first image in the entire images of the image sensor of the first camera, based on parallax between the first camera and the second camera. For example, the controller 330 may identify the fourth region corresponding to the region including the object within the first image in the entire region of the image sensor of the first camera, based on the difference between the direction in which the center of an angle of view of the first camera faces and the direction in which the center of an angle of view of the second camera faces and the difference between the location of the first camera and the location of the second camera within the electronic device 301. For example, the controller 330 may identify the fourth region to acquire pixel values for a scene including the subject corresponding to the object within the angle of view of the first camera within the entire region of the image sensor of the first camera, based on the difference between the direct in which the center of the angle of view of the first camera and the center of the angle of view of the second camera and the difference between the location of the first camera and the location of the second camera within the electronic device 301.

In an embodiment, the size of the fourth region can be changed according to the size of the object (or the region including the object) within the first image. For example, when the subject moves forward or backward based on the direction in which the subject faces the second camera, the size of the object corresponding to the subject may be changed within the image acquired through the second camera. In this case, the size of the fourth region may be the size that can be changed according to the size of the object (or the region including the object) within the first image.

In an embodiment, the size of the fourth region may be the fixed size. For example, the size of the fourth region may be maintained as the fixed size when the fourth region is configured to correspond to the zoom magnification and the zoom magnification is not changed.

In operation 1007, in an embodiment, the controller 330 may determine the first region (ROI) for acquiring the image within the regions of the image sensor (for example, the image sensor of the first camera 320), based on the size and the direction of motion of the electronic device 301 acquired through operation 1001 and the fourth region identified through operation 1005.

In an embodiment, in FIG. 11, an arrow 1141 indicates the size and the direction of motion of the electronic device 301 occurred by hand shaking and an arrow 1142 may indicate motion having the size that is the same as the size of motion of the electronic device 301 occurred by hand shaking and the direction opposite to the direction of motion of the electronic device 301. For example, the size (for example, the length) of the arrow 1142 may be the same as the size (for example, the length) of the arrow 1141. The direction of the arrow 1142 may be opposite to the direction of the arrow 1141.

In an embodiment, in FIG. 11, reference numeral 1120 may indicate the fourth region within the entire region 1110 of the image sensor. The controller 330 may determine a first region 1130, based on the size and the direction of motion of the electronic device 301 and the fourth region 1120. For example, the controller 330 may determine the first region 1130 having, as the center 1131, the location moved by displacement (for example, displacement corresponding to motion having the size that is the same as the size of motion of the electronic device 301 and having the direction opposite to the direction of motion of the electronic device 301) indicated by the arrow 1143 from the location of the center 1121 of the fourth region 1120 and having the size that is the same as the size of the fourth region 1120 relative to the center 1131.

In operation 1009, in an embodiment, the controller 330 may acquire pixel values of the pixels included in the first region. For example, the controller 330 may acquire pixel values only of the pixels included in the first region.

Since operation 1009 is the same as or similar to at least some of operation 505 of FIG. 5, detailed description thereof is omitted.

In operation 1011, in an embodiment, the controller 330 may provide the processor 360 with pixel values acquired through operation 1009.

Since operation 1011 is the same as or similar to at least some of operation 507 of FIG. 5, detailed description thereof is omitted.

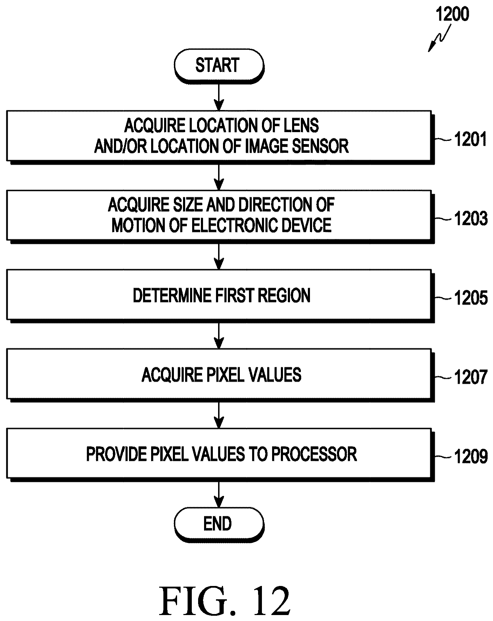

FIG. 12 is a flowchart 1200 illustrating a method of providing an image according to an embodiment.

In an embodiment, FIG. 12 may be a drawing for illustrating operations performed to provide the image by the electronic device 301 of FIG. 4.

In the following embodiments, respective operations may be sequentially performed but the sequential performance is not necessary. For example, orders of the operations may be changed, and at least two operations may be performed in parallel.

Referring to FIG. 12, in operation 1201, in an embodiment, the controller 330 may acquire the location of the lens and/or the location of the image sensor.

In an embodiment, the OIS controller 410 may perform OIS independently from an operation in which the controller 330 performs EIS. The OIS controller 410 may perform OIS, based on sensing data acquired from the IMU sensor 310 and sensing data acquired from the Hall sensor.

In an embodiment, the OIS controller 410 may acquire (for example, calculate) the size and/or the direction of motion of the electronic device 301 (for example, the camera 320) occurred by hand shaking, based on the sensing data acquired from the IMU sensor 310. For example, the OIS controller 410 may acquire sensing data related to an angular speed from the gyro sensor.

In an embodiment, the OIS controller 410 may acquire (for example, calculate) motion having the size that is the same as the size of motion of the electronic device 301 and having the direction opposite to the direction of motion of the electronic device 301, based on the size and/or the direction of motion of the electronic device 301 occurred by hand shaking.

In an embodiment, the OIS controller 410 may calculate the location of a target of the lens and/or the image sensor, based on motion having the direction opposite to the direction of motion of the electronic device 301. For example, when performing OIS by using the method of shifting the lens, the controller 410 may calculate the location of the target as the final location to which the lens is to be moved for OIS in the state in which the lens and the image sensor are arranged based on the optical axis (for example, the lens and the image sensor are arranged to put the center of the lens and the center of the image sensor on the optical axis).

In an embodiment, the OIS controller 410 may acquire the location of the lens and/or the location of the image sensor, based on sensing data provided from the Hall sensor 321. For example, when performing OIS by using the method of shifting the lens, the OIS controller 410 may acquire the current location of the lens.

In an embodiment, the OIS controller 410 may calculate the distance and the direction in which the lens and/or the image sensor are to be moved based on the calculated location of the target, location of the lens, and/or location of the image sensor (for example, the current location of the lens). For example, the OIS controller 410 may calculate the distance (for example, the distance to shift the lens) and the direction in which the lens is to be moved based on the location of the target of the lens and the current location of the lens.

In an embodiment, the OIS controller 410 may control the actuator 322, based on the distance and direction calculated by the movement amount processing unit. For example, the OIS controller 410 may control the actuator 322 to move the lens by the calculated distance and direction (for example, move the lens by the calculated distance and direction from the current location).

In an embodiment, the controller 330 may acquire the location of the lens and/or the location of the image sensor, based on sensing data provided from the Hall sensor 321. For example, when performing OIS by using the method of shifting the lens, the controller 330 may acquire the current location of the lens.

In operation 1203, in an embodiment, the controller 330 may acquire the size and the direction of motion of the electronic device 301.

Since operation 1203 is the same as or similar to at least some of operation 501 of FIG. 5, detailed description thereof is omitted.

In operation 1205, in an embodiment, the controller 330 may determine a first region for acquiring an image in which hand shaking is corrected within regions of the image sensor, based on the location of the lens and/or the location of the image sensor, and at least some of the size and direction of motion of the electronic device 301.

Since operation 1205 is the same as or similar to some of operation 503 of FIG. 5, overlapping description thereof is omitted.

In an embodiment, the controller 330 may acquire motion having the size that is the same as the size of motion of the electronic device 301 occurred by hand shaking and having the direction opposite to the direction of motion of the electronic device 301. The controller 330 may calculate coordinates of the first region, based on motion having the direction opposite to the direction of motion of the electronic device 301 in consideration of the location of the lens and/or the location of the image sensor (for example, the current location of the lens).

In an embodiment, the period at which OIS of correcting hand shaking is performed by moving the location of the lens and/or the location of the image sensor may be shorter than the period at which EIS of correcting tremor is performed based on sensing data acquired through the IMU sensor 310. The controller 330 may determine the first region to correct motion of the electronic device 301 (for example, motion changed during the time from a time point right before a time point at which the image sensor acquires an image frame to a time point at which the image frame is acquired) occurred by hand shaking in consideration of the location of the lens and/or the location of the image sensor acquired at a time point at which the first region is determined (for example, the current location of the moved lens through OIS performed at a time point right before the time point at which the ROI is determined).

In an embodiment, the above examples describe that the controller 330 determines the first region, based on motion having the direction opposite to the direction of motion of the electronic device 301 in consideration of the location of the lens and/or the current location of the image sensor, but are not limited thereto. For example, the controller 330 may acquire the average of locations of the lens and/or locations of the image sensor during the time from a time point right before a time point at which the image sensor acquires an image frame to a time point at which the image frame is acquired (for example, the average location of the locations of the lens calculated during the time from the time point right before the time point at which the image sensor acquires the image frame to the time point at which the image frame is acquired). The controller 330 may determine the first region, based on motion having the direction opposite to the direction of motion of the electronic device 301 in consideration of the acquired average of the locations of the lens and/or the locations of the image sensor.

In operation 1207, in an embodiment, the controller 330 may acquire pixel values of the pixels included in the first region. For example, the controller 330 may acquire pixel values of the pixels included only in the first region.

Since operation 1207 is the same as or similar to at least some of operation 505 of FIG. 5, detailed description thereof is omitted.

In operation 1209, in an embodiment, the controller 330 may provide the processor 360 with pixel values acquired through operation 1207.

Since operation 1209 is the same as or similar to at least some of operation 507 of FIG. 5, detailed description thereof is omitted.

The above examples describe the operation of providing the image by performing EIS (and OIS), based on sensing data acquired through the IMU sensor 310, but are not limited thereto. For example, the camera 320 may include a plurality of cameras. The camera 320 may include a first camera configured to acquire an image to be provided through the display 340 and a second camera configured to acquire an image to be used for correcting hand shaking to allow the first camera 320 to acquire the image in which hand shaking is corrected. The second camera may acquire an image for digital image stabilization (hereinafter, referred to as "DIS") of the image to be acquired through the first camera. The controller 330 may acquire the size and the direction of motion of the electronic device by using images acquired from the second camera (for example, difference images between the images) instead of the sensing data acquired through the IMU sensor 310. The controller 330 may acquire the image in which hand shaking is corrected (for example, pixel values of pixels included in the first region) by performing the above-described operation, based on at least some of the size and the direction of motion of the electronic device.

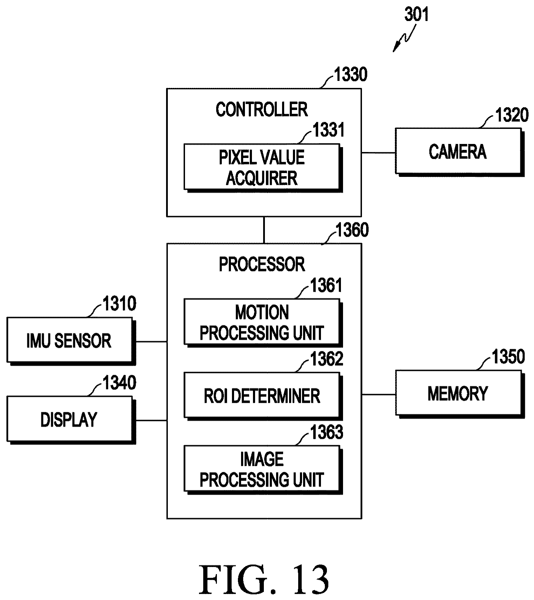

FIG. 13 is a block diagram of the electronic device 301 according to an embodiment.

Referring to FIG. 13, in an embodiment, an electronic device 301 may be the electronic device 101 of FIG. 1.

In an embodiment, the electronic device 301 may include an IMU sensor 1310, a camera 1320, a controller 1330, a display 1340, memory 1350, and a processor 1360.

In an embodiment, the IMU sensor 1310, the camera 1320, the display 1340, and the memory 1350 may be substantially the same as the IMU sensor 310, the camera 320, the display 340, and the memory 350 of FIG. 3. Accordingly, detailed description for the IMU sensor 1310, the camera 1320, the display 1340, and the memory 1350 is omitted.

In an embodiment, comparison between FIGS. 3 and 13, some of the functions performed by the controller 330 of FIG. 3 may be performed by the processor 1360. For example, the processor 1360 may further include a motion processing unit 1361 and an ROI determiner 1362 performing substantially the same functions as the functions performed by the motion processing unit 331 and the ROI determiner 332 included in the controller 330 of FIG. 3 as well as an image processing unit 1363.

In an embodiment, the motion processing unit 1361 may perform an operation that is substantially the same as the operation of the motion processing unit 331 included in the controller 330 of FIG. 3. For example, the motion processing unit 1361 may acquire (for example, acquire) the size and/or the direction of motion of the electronic device 301 (for example, the camera 1320) occurred by hand shaking, based on sensing data acquired from the IMU sensor 1310. The motion processing unit 1361 may acquire (for example, calculate) motion having the size that is the same as the size of motion of the electronic device 301 and having the direction opposite to the direction of motion of the electronic device 301, based on the size and/or the direction of motion of the electronic device 301 occurred by hand shaking.

In an embodiment, the ROI determiner 1362 may perform an operation that is substantially the same as the operation of the ROI determiner 332 included in the controller 330 of FIG. 3. For example, the ROI determiner 1362 may determine an ROI (first region) for acquiring an image (for example, the image in which hand shaking is corrected) in regions of the image sensor (for example, the entire region of the image sensor). For example, the ROI determiner 1362 may identify the size of the ROI determined based on the zoom magnification related to the camera 1320. The ROI determiner 1362 may determine (for example, calculate) coordinates of the ROI having the identified size (for example, the size of the ROI determined based on the zoom magnification related to the camera 1320) within the region of the image sensor, based on motion acquired by the motion processing unit 1361 and having the direction opposite to the direction of motion of the electronic device 301.

In an embodiment, the ROI determiner 1362 may provide information on the ROI (for example, coordinates of the ROI) to the pixel value acquirer 1331 included in the controller 1330.

In an embodiment, the pixel value acquirer 1331 included in the controller 1330 may perform an operation that is substantially the same as the operation performed by the pixel value acquirer 333 included in the controller 330 of FIG. 3. For example, the pixel value acquirer 1331 may acquire pixel values of the pixels included in the ROI within the image sensor. The pixel value acquirer 1331 may control at least some of the exposure operation for the pixels included in the ROI, based on the ROI determined by the ROI determiner. The pixel value acquirer 1331 may acquire pixels values of the pixels included in the ROI (e.g., only pixels values of the pixels included in the ROI) by controlling at least some of the exposure operation for the pixels included in the ROI. The pixel value acquirer 1331 may provide the acquired pixel values of the pixels included in the ROI to the image processing unit 1363 included in the processor 1360.

In an embodiment, the pixel value acquirer 1331 may acquire pixel values having a Bayer pattern by performing the binning operation or the remosaic operation for the pixel values of the pixels included in the ROI. The pixel value acquirer 1331 may provide the processor 1360 with pixel values having the Bayer pattern. However, the disclosure is not limited thereto. For example, the pixel value acquirer 1331 may provide the processor 1360 with pixel values having a non-Bayer pattern rather than the Bayer pattern.

In an embodiment, the image processing unit 1363 may perform the interpolation operation for generating an image (RGB image) to be displayed through the display, based on pixel values having the Bayer pattern being received from the controller 1330 (for example, the pixel value acquirer). The image processing unit 1363 may convert pixel values having the non-Bayer pattern into pixel values having the Bayer pattern, based on pixel values having the non-Bayer pattern being received from the controller 1330 (for example, the pixel value acquirer 1331). The image processing unit 1363 may perform the interpolation operation for generating the RGB image, based on the converted pixel values. However, the operation performed by the image processing unit 1363 is not limited to the interpolation operation. For example, the image processing unit 1363 may perform tone mapping, color correction, gamma correction, noise cancelling operation (for example, noise cancelling operation using a spatial filter and/or a temporal filter), lens shading correction, white balance control, color space conversion, and/or gamut control.

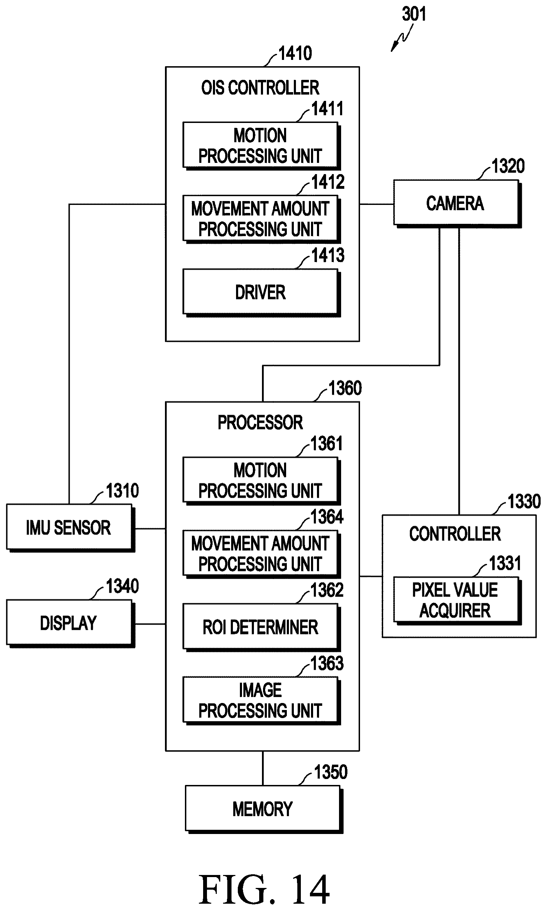

FIG. 14 is a block diagram of the electronic device 301 according to an embodiment.

Referring to FIG. 14, in an embodiment, the electronic device 301 may be the electronic device 101 of FIG. 1.

In an embodiment, the electronic device 301 may include components for performing OIS as well as components for performing EIS, based on sensing data acquired through the IMU sensor 1310. For example, in comparison between FIGS. 13 and 14, the electronic device 301 of FIG. 14 may further include an OIS controller 1330 compared to the electronic device 301 of FIG. 13.

In an embodiment, the electronic device 301 may include the IMU sensor 1310, the camera 1320, the controller 1330, the display 1340, the memory 1350, the processor 1360, and an OIS controller 1410.

In an embodiment, the IMU sensor 1310, the camera 1320, the display 1340, and the memory 1350 may be substantially the same as the IMU sensor 310, the camera 320, the display 340, and the memory 350 of FIG. 4. Accordingly, detailed description for the IMU sensor 1310, the camera 1320, the display 1340, and the memory 1350 is omitted.

In an embodiment, in comparison between FIGS. 4 and 14, the OIS controller 1410 may perform a function that is substantially the same as the function performed by the OIS controller 410 of FIG. 4. For example, a motion processing unit 1411, a movement amount processing unit 1412, and a driver 1413 may be substantially the same as the motion processing unit 411, the movement amount processing unit 412, and the driver 413 included in the OIS controller 410 of FIG. 4. Accordingly, detailed description for the motion processing unit 1411, the movement amount processing unit 1412, and the driver 1413 is omitted.

In an embodiment, the memory 1350 may store instructions that, when executed by at least one of at least one controller (e.g., the controller 1330) or at least one processor (e.g., the processor 1360), cause the electronic device 301 to perform operations described referring FIG. 13 to FIG. 17.

In an embodiment, in comparison between FIGS. 4 and 14, some of the functions performed by the controller 330 of FIG. 4 may be performed by the processor 1360. For example, the processor 1360 may further include the motion processing unit 1361, the movement amount processing unit 1364, and an ROI determiner 1362 performing the same functions as the motion processing unit 331, the movement amount processing unit 334, and the ROI determiner 332 included in the controller 330 of FIG. 4 as well as the image processing unit 1363.

In an embodiment, the motion processing unit 1361 may perform an operation that is substantially the same as the operation performed by the motion processing unit 331 included in the controller 330 of FIG. 4. Accordingly, detailed description for the motion processing unit 1361 is omitted.

In an embodiment, the movement amount processing unit 1364 may perform an operation that is substantially the same as the operation performed by the movement amount processing unit 334 included in the controller 330 of FIG. 4. For example, the movement amount processing unit 1364, may acquire the location of the lens and/or the location of the image sensor, based on sensing data provided from the Hall sensor included in the camera 1320.

In an embodiment, the ROI determiner 1362 may perform an operation that is substantially the same as the operation performed by the ROI determiner 332 included in the controller 1330 of FIG. 4. For example, the ROI determiner 1362 may acquire motion having the size that is the same as the size of motion of the electronic device 301 occurred by hand shaking and having the direction opposite to the direction of motion of the electronic device 301 from the motion processing unit 1361. The ROI determiner 1362 may acquire the location of the lens and/or the location of the image sensor (for example, the current location of the lens) from the movement amount processing unit 1364. The ROI determiner 1362 may calculate coordinates of the ROI, based on motion having the direction opposite to the direction of motion of the electronic device 301 in consideration of the location of the lens and/or the location of the image sensor.

In an embodiment, the ROI determiner 1362 may provide information on the ROI (for example, coordinates of the ROI) to the pixel value acquirer 1331 included in the controller 1330.

In an embodiment, the pixel value acquirer 1331 included in the controller 1330 may perform an operation that is substantially the same as the operation performed by the pixel value acquirer 333 included in the controller 330 of FIG. 4. Accordingly, detailed description for the pixel value acquirer 1331 is omitted.

In an embodiment, the image processing unit 1363 included in the processor 1360 may perform an operation that is substantially the same as the operation performed by the image processing unit 361 included in the processor 360 of FIG. 4. Accordingly, detailed description for the image processing unit 1331 is omitted.

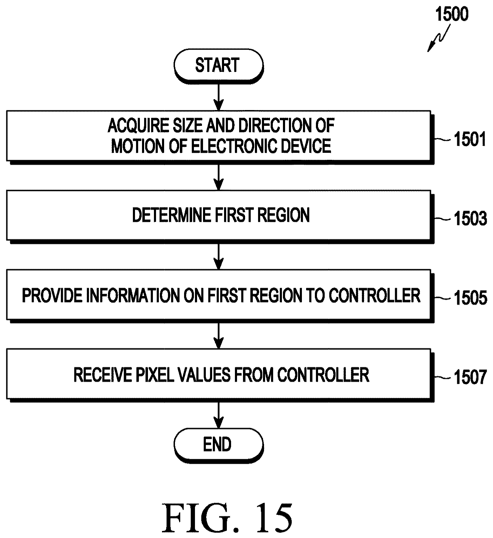

FIG. 15 is a flowchart 1500 illustrating a method of providing an image according to an embodiment.

In the following embodiments, respective operations may be sequentially performed but the sequential performance is not necessary. For example, orders of the operations may be changed, and at least two operations may be performed in parallel.

In an embodiment, FIG. 15 may be a drawing for illustrating operations performed to provide the image by the electronic device 301 of FIG. 13.

Referring to FIG. 15, in operation 1501, in an embodiment, the processor 1360 may acquire the size and the direction of motion of the electronic device 301 occurred by hand shaking, based on sensing data acquired through the IMU sensor 1310 while a camera application is executed.

Since the operation performed by the processor 1360 in operation 1510 is at least partially the same as or similar to the operation performed by the controller 330 in operation 501, detailed description is omitted.

In operation 1503, in an embodiment, the processor 1360 may determine a first region (ROI) for acquiring an image within regions of the image sensor, based on the size and the direction of motion of the electronic device 301.

Since the operation performed by the processor 1360 in operation 1503 is at least partially the same as or similar to the operation performed by the controller 330 in operation 503 of FIG. 5, detailed description is omitted.

In operation 1505, in an embodiment, the processor 1360 may provide information on the first region to the controller 1330. For example, the processor 1360 may provide the controller 1330 with coordinates of the first region within the entire region of the image sensor.

In an embodiment, the controller 1330 may control at least some of the exposure operation for pixels included in the first region, based on information on the first region received from the processor 1360.

In an embodiment, the controller 1330 may acquire pixel values of the pixels included in the first region by controlling at least some of the exposure operation for the pixels included in the first region. For example, the controller 1330 may acquire pixel values of the pixels included in the first region through the exposure operation and the readout operation for the pixels included in the first region.

In operation 1507, in an embodiment, the processor 1360 may receive pixel values from the controller 1330. For example, the processor 1360 may receive, from the controller 1330, pixel values of pixels included in the first region acquired by the controller 1330. For example, the processor 1360 may receive, from the controller 1330, pixel values only of pixels included in the first region acquired by the controller 1330.

In an embodiment, the processor 1360 may receive pixel values having the Bayer pattern or the non-Bayer pattern from the controller 1330.

In an embodiment, the processor 1360 may perform the interpolation operation for generating an image (RGB image) to be displayed through the display, based on pixel values having the Bayer pattern being received from the controller 1330.

In an embodiment, for the image (for example, the RGB image), the processor 1360 may perform tone mapping, color correction, gamma correction, noise cancelling operation (for example, noise cancelling operation using a spatial filter and/or a temporal filter), lens shading correction, white balance control, color space conversion, and/or gamut control.

In an embodiment, the processor 1360 may display the image (for example, the RGB image) through the display.

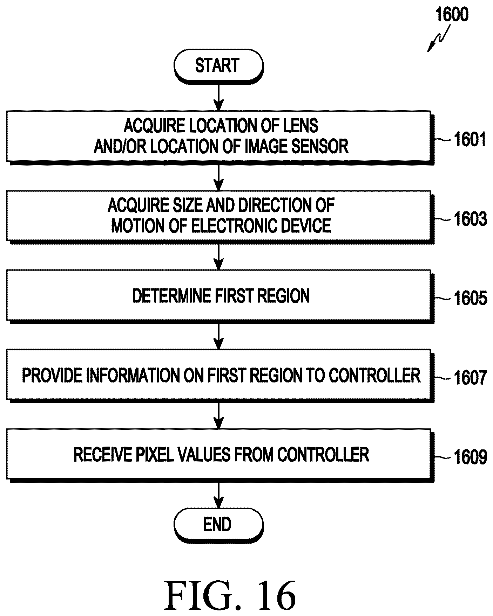

FIG. 16 is a flowchart 1600 illustrating a method of providing an image according to an embodiment.

In an embodiment, FIG. 16 may be a drawing illustrating operations performed to provide an image by the electronic device 301 of FIG. 14.

In the following embodiments, respective operations may be sequentially performed but the sequential performance is not necessary. For example, orders of the operations may be changed, and at least two operations may be performed in parallel.

Referring to FIG. 16, in operation 1601, in an embodiment, the processor 1360 may acquire the location of the lens and/or the location of the image sensor.

Since the operation performed by the processor 1360 in operation 1601 is at least partially the same as or similar to the operation performed by the controller 330 in operation 1201 of FIG. 12, detailed description thereof is omitted.

In operation 1603, in an embodiment, the processor 1360 may acquire the size and the direction of motion of the electronic device 301.

Since the operation performed by the processor 1360 in operation 1603 is at least partially the same as or similar to the operation performed by the controller 330 in operation 1203 of FIG. 12, detailed description thereof is omitted.

In operation 1605, in an embodiment, the processor 1360 may determine a first region for acquiring an image in which hand shaking is corrected within regions of the image sensor, based on the location of the lens and/or the location of the image sensor and at least some of the size and the direction of motion of the electronic device 301.

Since the operation performed by the processor 1360 in operation 1605 is at least partially the same as or similar to the operation performed by the controller 330 in operation 1205 of FIG. 12, detailed description thereof is omitted.

In operation 1607, in an embodiment, the processor 1360 may provide information on the first region to the controller 1330. For example, the processor 1360 may provide the controller 1330 with coordinates of the first region within the entire region of the image sensor.

Since operation 1605 is the same as or similar to at least some of operation 1505 of FIG. 15, detailed description thereof is omitted.

In operation 1609, in an embodiment, the processor 1360 may receive pixel values from the controller 1330. For example, the processor 1360 may receive, from the controller 1330, pixel values of pixels included in the first region acquired by the controller 1330. For example, the processor 1360 may receive, from the controller 1330, pixel values of pixels included only in the first region acquired by the controller 1330.

Since operation 1609 is at least partially the same or similar to operation 1507 of FIG. 15, detailed description thereof is omitted.

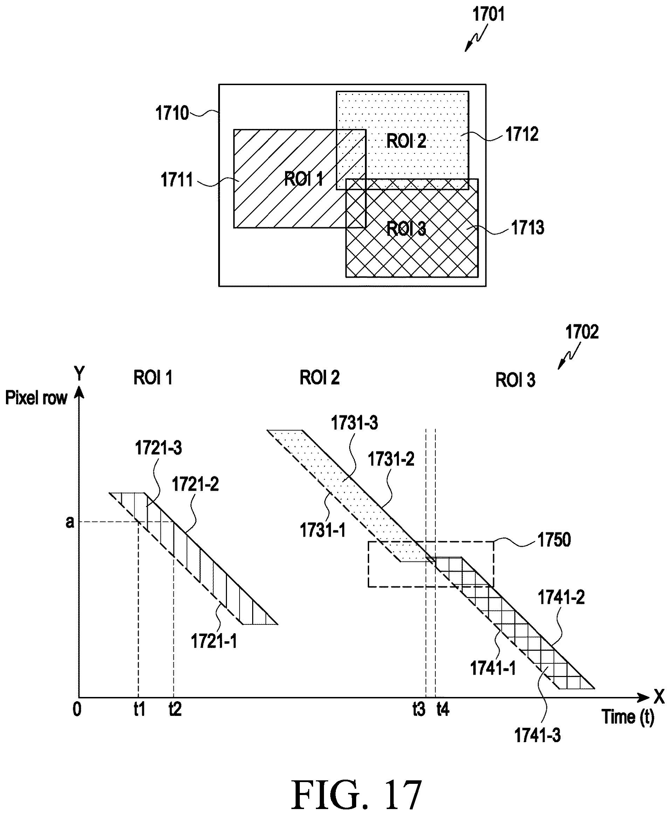

FIG. 17 is a diagram illustrating the method of providing the image according to an embodiment.

Referring to FIG. 17, in an embodiment, FIG. 17 may be a drawing illustrating an anyplace zoom function.

In an embodiment, the anyplace zoom function may be a function that provides an image for a region including an object corresponding to a subject (e.g., a subject to be depicted by a camera). For example, the anyplace zoom function may be a function for acquiring, when the subject moves through a region (hereinafter, referred to as a "zoom region" or a "region of interest (ROI)") having the size corresponding to the zoom magnification (for example, 2.0x) within the entire region of the image sensor, an image indicating a scene for the moving subject.

In an embodiment, when the anyplace zoom function is performed, the resolution of the image acquired through the zoom region may be substantially the same as the resolution of the image acquired through the entire region of the image sensor. For example, when the anyplace zoom function is performed, it is possible to acquire an image having the resolution that is substantially the same as the resolution of the image acquired through the entire region of the image sensor and including the object corresponding to the subject through the remosaic operation for the image acquired through the zoom region.

In an embodiment, reference numeral 1701 of FIG. 17 may indicate zoom regions sequentially configured by the camera in units of frames within the entire region 1710 of the image sensor. For example, ROI 1 1711, ROI 2 1712, and ROI 3 1713 may be sequentially configured in units of frames within the entire region 1710 of the image sensor.

In an embodiment, reference numeral 1702 of FIG. 17 may be a graph illustrating an operation of acquiring images (for example, pixel values acquired in ROI 1 1711, ROI 2 1712, and ROI 3 1713) in ROI 1 1711, ROI 2 1712, and ROI 3 1713.

In an embodiment, as indicated by reference numeral 1702, the X axis may indicate the time (t). As indicated by reference numeral 1702, the Y axis may indicate rows of pixels (hereinafter, referred to as "pixel rows") included in the entire region 1710 of the image sensor included in the camera operated by a rolling shutter method. As indicated by reference numeral 1702, the largest value of the Y axis values may indicate a row arranged on the top of the image sensor among the rows of the pixels included in the entire region 1710 of the image sensor, and the smallest value of the Y axis values may indicate a row arranged on the bottom of the image sensor among the rows of the pixels included in the entire region 1710 of the image sensor.

In an embodiment, a line 1721-1 may indicate time points at which exposure for pixel rows included in ROI 1 1711 starts, and a line 1721-2 may indicate time points at which read out for pixel rows included in ROI 1 1711 starts. Region 1721-3 may indicate the time at which the exposure operation for the pixel rows included in ROI 1 1711 is performed. For example, the exposure operation for a pixel row a may be performed from the time (t1) to the time (t2).

In an embodiment, a line 1731-1 may indicate time points at which exposure for pixel rows included in ROI 2 1712 starts, and a line 1731-2 may indicate time points at which read out for pixel rows included in ROI 2 1712 starts. A region 1731-3 may indicate the time at which the exposure operation for the pixel rows included in ROI 2 1712 is performed.

In an embodiment, a line 1741-1 may indicate time points at which exposure for pixel rows included in ROI 3 1713 starts, and a line 1741-2 may indicate time points at which read out for pixel rows included in ROI 3 1713 starts. Region 1741-3 may indicate the time at which the exposure operation for the pixel rows included in ROI 3 1713 is performed.

In an embodiment, as indicated by reference numeral 1702, a portion of the exposure time for ROI 2 1712 and a portion of the exposure time for ROI 3 1713 may overlap each other as shown in a region 1750 marked by dotted lines. For example, exposure of the bottom pixel row of ROI 2 1712 may end at the time (t2), and exposure of the top pixel row of ROI 3 1713 may start at the time (t3) earlier than the time (t4). In this case, frame drop that makes some of the pixel values acquired from RIO 2 1712 or at least one of the pixel values acquired from ROI 3 1713 not acquired may be generated.

In an embodiment, as a method of preventing (or minimizing) the frame drop, a method of reducing the exposure time, a method of reducing the FPS of the camera, and a method of reducing the size of the ROI may be considered. However, when the exposure time is reduced, a problem of acquiring an image having low brightness may occur. When the FPS of the camera is reduced, it may be difficult to reduce the FPS of the camera to be equal to or lower than about 30 FPS.

In an embodiment, when pixel values of pixels included in the region including the margin region are acquired within the entire region of the image sensor, the size of the region including the margin region may be larger than the size of the first region (for example, the first region that does not include the margin region) determined in consideration of motion of the electronic device 301 occurred by hand shaking within the entire region of the image sensor as described with reference to FIGS. 3 to 16. Accordingly, it is possible to prevent (or minimize) frame drop by determining the first region in consideration of motion of the electronic device 301 occurred by hand shaking within the entire region of the image sensor.

An electronic device 301 according to an embodiment may include an IMU sensor 310, a camera 320 including an image sensor, a processor 360, and a controller 330. The controller 330 may be configured to acquire a size and a direction of motion of the electronic device 301 occurred by hand shaking, based on sensing data acquired through the IMU sensor 310 while a camera application is executed. The controller 330 may be configured to determine a first region for acquiring an image within the entire region of the image sensor, based on the size and the direction of the motion of the electronic device 301. The controller 330 may be configured to acquire pixel values of pixels included in the first region. The controller 330 may be configured to provide the acquired pixel values to the processor 360.

In an embodiment, the controller 330 may be configured to acquire pixel values of a Bayer pattern by performing a pixel binning operation or a remosaic operation, based on the pixel values. The controller 330 may be configured to provide the pixel values of the Bayer pattern to the processor 360.

In an embodiment, the controller 330 may be configured to acquire the pixel values of a non-Bayer pattern. The controller 330 may be configured to provide the pixel values of the non-Bayer pattern to the processor 360. The processor 360 may be configured to convert the pixel values of the non-Bayer pattern into pixel values of the Bayer pattern.

In an embodiment, the controller 330 may be configured to acquire the pixel values corresponding to the pixels, respectively, by controlling the camera 320 to perform an exposure operation and a readout operation for the pixels included in the first region.

In an embodiment, the controller 330 may be configured to identify a size of the first region determined based on a zoom magnification related to the camera 320. The controller 330 may be configured to determine the first region for acquiring the image in which the motion of the electronic device 301 is corrected occurred by the hand shaking within regions of the image sensor, based on the identified size of the first region, the size of the motion of the electronic device 301, and a direction opposite to the direction.

In an embodiment, the electronic device 301 may further include an OIS controller 410 configured to perform optical image stabilization (OIS) of the camera 320 and a sensor (for example, the Hall sensor 321) configured to acquire a location of a lens included in the camera 320 and/or a location of the image sensor. The OIS controller 410 may be configured to perform correcting the motion of the electronic device 301 occurred by the hand shaking by using the IMU sensor 310 and the sensor. The controller 330 may be configured to determine the first region, based on the location of the lens and/or the location of the image sensor acquired through the sensor, and the size and the direction of the motion of the electronic device 301.

In an embodiment, the electronic device 301 may include another camera other than the camera 320. The controller 330 may be configured to recognize an object within a first image acquired through the other camera. The controller 330 may be configured to identify a region including the recognized object within the first image. The controller 330 may be configured to determine the first region, based on a region corresponding to the identified region within the entire region of the image sensor, and the size and the direction of the motion of the electronic device 301.

In an embodiment, the electronic device 301 may include another camera other than the camera 320. The controller 330 may be configured to acquire the size and the direction of the motion of the electronic device (301), based on second images acquired through the other camera. The controller 330 may be configured to determine the first region, based on the size and the direction of the motion of the electronic device (301) acquired based on the second images.

In an embodiment, the controller 330 may be included in the camera 320.

A method of providing an image by an electronic device 301 according to an embodiment may include an operation of, by a controller 330 of the electronic device 301, acquiring a size and a direction of motion of the electronic device 301 occurred by hand shaking, based on sensing data acquired through tan IMU sensor 310 of the electronic device 301 while a camera application is executed. The method may include an operation of, by the controller 330 of the electronic device 301, determining a first region for acquiring an image within the entire region of an image sensor included in a camera 320 of the electronic device 301, based on the size and the direction of the motion of the electronic device 301. The method may include an operation of, by the controller 330 of the electronic device 301, acquiring pixel values of pixels included in the first region. The method may include an operation of, by the controller 330 of the electronic device 301, providing the acquired pixel values to a processor 360 of the electronic device 301.

In an embodiment, the operation of acquiring the pixel values of the pixels included in the first region may include an operation of acquiring pixel values of a Bayer pattern by performing a pixel binning operation or a remosaic operation, based on the pixel values. The operation of providing the acquired pixel values to the processor 360 of the electronic device 301 may include an operation of providing the pixel values of the Bayer pattern to the processor 360.

In an embodiment, the operation of acquiring the pixel values of the pixels included in the first region may include an operation of acquiring the pixel values of a non-Bayer pattern. The operation of providing the acquired pixel values to the processor 360 of the electronic device 301 may include an operation of providing the pixel values of the non-Bayer pattern to the processor 360. The method may further include an operation in which the processor 360 converts the pixel values of the non-Bayer pattern into pixel values of the Bayer pattern.

In an embodiment, the operation of acquiring the pixel values of the pixels included in the first region may include an operation of acquiring the pixel values corresponding to the pixels, respectively, by controlling the camera 320 to perform an exposure operation and a readout operation for the pixels included in the first region.

In an embodiment, the method may further include an operation of identifying a size of the first region determined based on a zoom magnification related to the camera 320. The operation of determining the first region may include an operation of determining the first region for acquiring the image in which the motion of the electronic device 301 is corrected occurred by the hand shaking within the entire region of the image sensor, based on the identified size of the first region, the size of the motion of the electronic device 301, and a direction opposite to the direction.

In an embodiment, the method may further include an operation of, by an OIS controller 410 configured to perform OIS of the camera 320, correcting the motion of the electronic device 301 occurred by the hand shaking by using the IMU sensor 310 and a sensor (for example, the Hall sensor 321) configured to acquire a location of a lens included in the camera 320 and/or a location of the image sensor. The operation of determining the first region may include an operation of determining the first region, based on the location of the lens and/or the location of the image sensor acquired through the sensor, and the size and the direction of the motion of the electronic device 301.

In an embodiment, the method may further include an operation of recognizing an object within a first image acquired through another camera. The method may further include an operation of identifying a region including the recognized object within the first image. The operation of determining the first region may include an operation of determining the first region, based on a region corresponding to the identified region within the entire region of the image sensor, and the size and the direction of the motion of the electronic device 301.

In an embodiment, the method may further include an operation of acquiring the size and the direction of the motion of the electronic device 301, based on second images acquired through another camera. The operation of determining the first region may include an operation of determining the first region, based on the size and the direction of the motion of the electronic device 301 acquired based on the second images.

In an embodiment, the controller 330 may be included in the camera 320.

The electronic device 301 according to an embodiment may include an IMU sensor 1310, a camera 1320 including an image sensor, a controller 1330, and a processor 1360. The processor 1360 may be configured to acquire a size and a direction of motion of the electronic device 301 occurred by hand shaking, based on sensing data acquired through the IMU sensor 1310 while a camera application is executed. The processor 1360 may be configured to determine a first region for acquiring an image within the entire region of the image sensor, based on the size and the direction of the motion of the electronic device 301. The processor 1360 may be configured to provide information on the first region to the controller 330 to allow the controller 1330 to acquire pixel values of pixels included in the first region. The processor 1360 may be configured to receive the pixel values acquired by the controller 1330 from the controller 1330.

In an embodiment, the electronic device 301 may further include an OIS controller 1410 configured to perform OIS of the camera and a sensor (for example, a Hall sensor) configured to acquire a location of a lens included in the camera 320 and/or a location of the image sensor. The OIS controller 1410 may be configured to perform an operation of correcting the motion of the electronic device 301 occurred by the hand shaking through the IMU sensor 1310 and by using the sensor. The processor 1360 may be configured to determine the first region, based on the location of the lens and/or the location of the image sensor acquired through the sensor, and the size and the direction of the motion of the electronic device 301.

The structure of data used in the embodiments of the disclosure may be recorded in a computer-readable recording medium through various means. The computer-readable recording medium includes a magnetic storage medium (for example, a ROM, a floppy disk, and a hard disk) and an optical reading medium (for example, a CD-ROM and a DVD).

According to an aspect of the disclosure regarding the electronic device, the electronic device may comprise an inertial measurement unit (IMU) sensor; a camera including an image sensor; a processor; and a controller.

The controller may be configured to, while a camera application is executed, based on sensing data obtained through the IMU sensor, obtain a size and a direction of a motion of the electronic device occurred by hand shaking. The controller may be configured to, based on the size and the direction of the motion of the electronic device, determine a first region for obtaining an image in an entire region of the image sensor. The controller may be configured to obtain pixel values of pixels included in the first region. The controller may be configured to obtain pixel values only of pixels included in the first region. The controller may be configured to provide the obtained pixel values to the processor.

Alternatively or additionally, the processor may be configured to acquire a size and a direction of motion of the electronic device occurred by hand shaking, based on sensing data acquired through the IMU sensor while a camera application is executed. The processor may be configured to determine a first region for acquiring an image within an entire region of the image sensor, based on the size and the direction of the motion of the electronic device. The processor may be configured to provide information on the first region to the controller so as to allow the controller to acquire pixel values of pixels included in the first region. The processor may be configured to provide information on the first region to the controller so as to allow the controller to acquire pixel values only of pixels included in the first region. The processor may be configured to receive the pixel values acquired by the controller from the controller.

The first region may be smaller than a total region of image sensor, the total region including all pixels of the image sensor. The first region may be a subregion of the image sensor. The first region may be a subregion of a total region of the image sensor, the total region including all pixels of the image sensor.

According to an aspect of the disclosure regarding the electronic device, the controller may be configured to, by performing, based on the pixel values, a pixel binning operation or a remosaic operation, obtain pixel values of a Bayer pattern, and may provide the pixel values of the Bayer pattern to the processor.

According to an aspect of the disclosure regarding the electronic device, the controller may be configured to obtain pixel values of a non-Bayer pattern, and may provide the pixel values of the non-Bayer pattern to the processor. The processor may be configured to convert the pixel values of the non-Bayer pattern to the pixel values of the Bayer pattern.

According to an aspect of the disclosure regarding the electronic device, the controller may be configured to, by controlling the camera such that the camera performs an exposure operation and a readout operation on the pixels included in the first region, obtain the pixel values corresponding to the pixels, respectively.

According to an aspect of the disclosure regarding the electronic device, the controller may be configured to identify a size of the first region, the size of the first region being determined based on zoom magnification related to the camera. The controller may be configured to, based on the identified size of the first region, identify the size of the motion of the electronic device and a direction opposite to the direction of the motion of the electronic device, determine, in the region of the image sensor, the first region for obtaining the image in which the motion of the electronic device occurred by the hand shaking is corrected.

According to an aspect of the disclosure regarding the electronic device, the electronic device may further comprise an OIS (optical image stabilization) controller configured to perform an OIS of the camera. The electronic device may further comprise a sensor configured to obtain a position of a lens included in the camera and/or a position of the image sensor. The OIS controller may be configured to perform correcting the motion of the electronic device occurred by the hand shaking using the IMU sensor and the sensor. The controller may be configured to, based on the position of the lens and/or the position of the image sensor obtained through the sensor, and the size and the direction of the motion of the electronic device, determine the first region.

According to an aspect of the disclosure regarding the electronic device, the electronic device may further comprise another camera other than the camera. The controller may be configured to recognize an object in a first image obtained through the other camera, identify, in the first image, a region including the recognized object, and based on a region corresponding to the identified region in the entire region of the image sensor, and the size and the direction of the motion of the electronic device, determine the first region.

According to an aspect of the disclosure regarding the electronic device, the electronic device may further comprise another camera other than the camera. The controller may be configured to, based on second images obtained through the other camera, obtain the size and the direction of the motion of the electronic device, and, based the size and the direction of the motion of the electronic device obtained based on second images, determine the first region.

According to an aspect of the disclosure regarding the electronic device, in the controller may be included in the camera.

According to another aspect of the disclosure regarding a method of providing an image by an electronic device, the method may comprise acquiring, e.g., by a controller of the electronic device, a size and a direction of motion of the electronic device occurred by hand shaking, based on sensing data e.g., acquired through an inertial measurement unit (IMU) sensor of the electronic device while a camera application is executed. The method may comprise determining, e.g., by the controller of the electronic device, a first region for acquiring an image within an entire region of an image sensor included in a camera of the electronic device, based on the size and the direction of the motion of the electronic device. The method may comprise acquiring, e.g., by the controller of the electronic device, pixel values of pixels included in the first region. The method may comprise acquiring, e.g., by the controller of the electronic device, pixel values only of pixels included in the first region. The method may provide, e.g., by the controller of the electronic device, the acquired pixel values to e.g., a processor of the electronic device. The first region may be smaller than a total region of image sensor, the total region including all pixels of the of image sensor. The first region may be a subregion of the image sensor. The first region may be a subregion of a total region of image sensor, the total region including all pixels of the of image sensor.

According to an aspect of the disclosure regarding the method, the acquiring of the pixel values of the pixels included in the first region may comprise acquiring pixel values of a Bayer pattern by performing a pixel binning operation or a remosaic operation, based on the pixel values. The providing of the acquired pixel values to the processor of the electronic device may comprise providing the pixel values of the Bayer pattern to the processor.

According to an aspect of the disclosure regarding the method, the acquiring of the pixel values of the pixels included in the first region may comprise acquiring pixel values of a non-Bayer pattern. The providing of the acquired pixel values to the processor of the electronic device may comprise providing the pixel values of the non-Bayer pattern to the processor. The processor may convert the pixel values of the non-Bayer pattern into pixel values of the Bayer pattern.

According to an aspect of the disclosure regarding the method, the acquiring of the pixel values of the pixels included in the first region may comprise acquiring the pixel values corresponding to the pixels, respectively, by controlling the camera to perform an exposure operation and a readout operation for the pixels included in the first region.

According to an aspect of the disclosure regarding the method, the method may further comprise identifying a size of the first region determined based on a zoom magnification related to the camera. The determining of the first region may comprise determining the first region for acquiring the image in which the motion of the electronic device occurred by the hand shaking within regions of the image sensor is corrected, based on the identified size of the first region, the size of the motion of the electronic device, and a direction opposite to the direction.

According to an aspect of the disclosure regarding the method, the method may further comprise correcting, by an OIS controller configured to perform OIS of the camera, the motion of the electronic device occurred by the hand shaking by using the IMU sensor and a sensor configured to acquire a location of a lens included in the camera and/or a location of the image sensor. The determining of the first region may comprise determining the first region, based on the location of the lens and/or the location of the image sensor, acquired through the sensor, and the size and the direction of the motion of the electronic device.

According to an aspect of the disclosure regarding the method, the method may further comprise recognizing an object within a first image acquired through another camera. The method may further comprise identifying a region comprising the recognized object within the first image. The determining of the first region may comprise determining the first region, based on a region corresponding to the identified region within an entire region of the image sensor, and the size and the direction of the motion of the electronic device.

According to an aspect of the disclosure regarding the method, the method may further comprise acquiring the size and the direction of the motion of the electronic device, based on second images acquired through another camera. The determining of the first region may comprise determining the first region, based on the size and the direction of the motion of the electronic device acquired based on the second images.

According to an aspect of the disclosure regarding the method, the controller may be included in the camera.

According to another aspect of the disclosure regarding the electronic device, the electronic device may comprise an inertial measurement unit (IMU) sensor; a camera comprising an image sensor; a controller; and a processor. The processor may be configured to acquire a size and a direction of motion of the electronic device occured by hand shaking, based on sensing data acquired through the IMU sensor while a camera application is executed. The processor may be configured to determine a first region for acquiring an image within an entire region of the image sensor, based on the size and the direction of the motion of the electronic device. The processor may be configured to provide information on the first region to the controller so as to allow the controller to acquire pixel values of pixels included in the first region. The processor may be configured to receive the pixel values acquired by the controller from the controller.

According to an aspect of the disclosure regarding the electronic device, in particular the electronic device according to the other aspect of the disclosure, the electronic device may comprise an OIS controller configured to perform OIS of the camera. The electronic device may comprise a sensor configured to acquire a location of a lens included in the camera and a location of the image sensor. The OIS controller may be configured to perform an operation of correcting the motion of the electronic device occurred by the hand shaking through the IMU sensor and by using the sensor. The processor may be configured to determine the first region, based on the location of the lens and/or the location of the image sensor acquired through the sensor, and the size and the direction of the motion of the electronic device.

The first region may be smaller than a total region of image sensor, the total region including all pixels of the of image sensor. The first region may be a subregion of the image sensor. The first region may be a subregion of a total region of image sensor, the total region including all pixels of the of image sensor.

A remosaic operation may also be know as a demosaic operation or as demosaicing or color reconstruction, any may be a digital image processing algorithm used to reconstruct a full color image from the incomplete color samples output from an image sensor overlaid with a color filter array (CFA) such as a Bayer filter. It may also be known as CFA interpolation or debayering. Tetracell technology may also be known as Quad Bayer or 4-cell technology.

## Claims

1. An electronic device (301) comprising:
an inertial measurement unit, IMU, sensor (310);
a camera (320) including an image sensor;
a processor (360); and
a controller (330),
wherein the controller (330) is configured to:
while a camera application is executed, based on sensing data obtained through the IMU sensor (310), obtain a size and a direction of a motion of the electronic device (301) occurred by hand shaking,
based on the size and the direction of the motion of the electronic device (301), determine a first region for obtaining an image in an entire region of the image sensor,
obtain pixel values of pixels included in the first region, and
provide the obtained pixel values to the processor (360).

2. The electronic device (301) of claim 1, wherein the controller (330) is configured to:
by performing, based on the pixel values, a pixel binning operation or a remosaic operation, obtain pixel values of a Bayer pattern, and
provide the pixel values of the Bayer pattern to the processor (360).

3. The electronic device (301) of claim 1 or 2, wherein the controller (330) is configured to:
obtain pixel values of a non-Bayer pattern, and
provide the pixel values of the non-Bayer pattern to the processor (360),
wherein the processor (360) is configured to convert the pixel values of the non-Bayer pattern to the pixel values of the Bayer pattern.

4. The electronic device (301) of any one of claims 1 to 3, wherein the controller (330) is configured to:
by controlling the camera (320) such that the camera (320) performs an exposure operation and a readout operation on the pixels included in the first region, obtain the pixel values corresponding to the pixels, respectively.

5. The electronic device (301) of any one of claims 1 to 4, wherein the controller (330) is configured to:
identify a size of the first region, the size of the first region being determined based on zoom magnification related to the camera (320), and
based on the identified size of the first region, the size of the motion of the electronic device (301) and a direction opposite to the direction of the motion of the electronic device (301), determine, in the region of the image sensor, the first region for obtaining the image in which the motion of the electronic device (301) occurred by the hand shaking is corrected.

6. The electronic device (301) of any one of claims 1 to 5, further comprises:
an optical image stabilization, OIS, controller (410) configured to perform an OIS of the camera (320); and
a sensor configured to obtain a position of a lens included in the camera (320) and/or a position of the image sensor,
wherein the OIS controller (410) is configured to:
perform correcting the motion of the electronic device occurred by the hand shaking using the IMU sensor (310) and the sensor, and
wherein the controller (330) is configured to:
based on the position of the lens and/or the position of the image sensor obtained through the sensor, and the size and the direction of the motion of the electronic device (301), determine the first region.

7. The electronic device (301) of any one of claims 1 to 6, further comprises:
another camera other than the camera (320),
wherein the controller (330) is configured to:
recognize an object in a first image obtained through the other camera, identify, in the first image, a region including the recognized object, and
based on a region corresponding to the identified region in the entire region of the image sensor, and the size and the direction of the motion of the electronic device (301), determine the first region.

8. The electronic device (301) of any one of claims 1 to 7, further comprises:
another camera other than the camera (320),
wherein the controller (330) is configured to:
based on second images obtained through the other camera, obtain the size and the direction of the motion of the electronic device (301), and
based the size and the direction of the motion of the electronic device (301) obtained based on second images, determine the first region.

9. The electronic device (301) of any one of claims 1 to 8, wherein the controller (330) is included in the camera (320).

10. A method of providing an image by an electronic device (301), the method comprising:
acquiring, by a controller (330) of the electronic device (301), a size and a direction of motion of the electronic device (301) occurred by hand shaking, based on sensing data acquired through an inertial measurement unit, IMU, sensor (310) of the electronic device (301) while a camera application is executed;
determining, by the controller (330) of the electronic device (301), a first region for acquiring an image within an entire region of an image sensor included in a camera (320) of the electronic device (301), based on the size and the direction of the motion of the electronic device (301);
acquiring, by the controller (330) of the electronic device (301), pixel values of pixels included in the first region; and
providing, by the controller (330) of the electronic device (301), the acquired pixel values to a processor (360) of the electronic device (301).

11. The method of claim 10, wherein the acquiring of the pixel values of the pixels included in the first region comprises acquiring pixel values of a Bayer pattern by performing a pixel binning operation or a remosaic operation, based on the pixel values, and
wherein the providing of the acquired pixel values to the processor (360) of the electronic device (301) comprises providing the pixel values of the Bayer pattern to the processor (360).

12. The method of claim 10 or 11, wherein the acquiring of the pixel values of the pixels included in the first region comprises acquiring pixel values of a non-Bayer pattern;
wherein the providing of the acquired pixel values to the processor (360) of the electronic device (301) comprises providing the pixel values of the non-Bayer pattern to the processor (360); and
wherein the processor (360) converts the pixel values of the non-Bayer pattern into pixel values of the Bayer pattern.

13. The method of any one of claims 10 to 12, wherein the acquiring of the pixel values of the pixels included in the first region comprises acquiring the pixel values corresponding to the pixels, respectively, by controlling the camera (320) to perform an exposure operation and a readout operation for the pixels included in the first region.

14. The method of any one of claims 10 to 13, further comprising identifying a size of the first region determined based on a zoom magnification related to the camera (320),
wherein the determining of the first region comprises determining the first region for acquiring the image in which the motion of the electronic device (301) occured by the hand shaking within regions of the image sensor is corrected, based on the identified size of the first region, the size of the motion of the electronic device (301), and an opposite direction to the direction.

15. A computer-readable recording medium comprising instructions that, when executed by a controller (330) of an electronic device (301) that comprises an inertial measurement unit sensor (310), a camera (320) including an image sensor, the controller (330), and a processor (360), cause the electronic device (301) to execute the method of any of claims 10 to 14.
